# EUROPÄISCHE PATENTSCHRIFT

(11) **EP 4 154 700 B1**
(45) Veröffentlichungstag und Bekanntmachung des Hinweises auf die Patenterteilung: **01.07.2026**
(21) Anmeldenummer: 22184005.1
(22) Anmeldetag: 11.07.2022
(51) Int. Cl.: A01D 41/127, A01D 41/14

(54) **ERNTEMASCHINE MIT BANDSCHNEIDWERK**
HARVESTING MACHINE WITH BELT CUTTER
ENGIN D'ABATTAGE-FAÇONNAGE POURVU DE MÉCANISME DE COUPE DE BANDE

(30) Priorität: 28.09.2021 DE 102021125099
(43) Veröffentlichungstag der Anmeldung: 29.03.2023
(73) Patentinhaber: CLAAS Selbstfahrende Erntemaschinen GmbH, 33428 Harsewinkel (DE)
(72) Erfinder: Baumgarten, Joachim, 48361 Beelen (DE); Wilken, Andreas, 49143 Bissendorf (DE); Neitemeier, Dennis, 59510 Lippetal (DE); Bormann, Bastian, 33334 Gütersloh (DE); Spiekermann, Sebastian, 48346 Ostbevern (DE); Irmer, Daniel, 33442 Herzebock-Clarholz (DE)
(74) Vertreter: CLAAS Gruppe

(56) Entgegenhaltungen:
- EP-A1- 2 382 854
- EP-A1- 3 132 711
- EP-A2- 2 687 924
- US-A1- 2018 054 964
- KE�LER MARCO ET AL: "Control and Characteristic Map Generation of Permanent Magnet Synchronous Machines and Induction Machines with Squirrel Cage", PROCEEDINGS OF THE 10TH INTERNATIONAL MODELICA CONFERENCE, MARCH 10-12, 2014, LUND, SWEDEN, vol. 96, 10 March 2014 (2014-03-10), pages 1151 - 1160, XP093318197, ISBN: 978-91-7519-380-9, DOI: 10.3384/ecp140961151
- HELLBERG TOBIAS ET AL: "Usage-based optimisation of characteristic maps for conceptual powertrain design", AUTOMOTIVE AND ENGINE TECHNOLOGY, vol. 2, no. 1-4, 17 April 2017 (2017-04-17), pages 49 - 61, XP093318278, ISSN: 2365-5127, DOI: 10.1007/s41104-017-0017-5
- MARCUS GEIMER PROF DR-ING ET AL: "Hybridantriebe f�r mobile Arbeitsmaschinen", 17 February 2011 (2011-02-17), XP093318199, Retrieved from the Internet <URL:https://www.ksp.kit.edu/books/2056/files/3ddae14d-f396-42b4-9c98-80c90749282e.pdf?utm_source=chatgpt.com>

## Beschreibung

Die Erfindung betrifft eine landwirtschaftliche Erntemaschine mit einem als Bandschneidwerk ausgebildeten Erntevorsatz zum Schneiden und Aufnehmen von Erntegut und mit einem Fahrerassistenzsystem zur Ansteuerung des Bandschneidwerks nach dem Oberbegriff des Anspruchs 1.

Fahrerassistenzsysteme zur teilautomatisierten Ansteuerung von Erntevorsätzen sind aus dem Stand der Technik hinlänglich bekannt. Beispielhaft sei hier auf die EP 3 132 711 A1 verwiesen, in welcher ein Schneidwerkautomat beschrieben wird, der die Arbeitsparameter eines einer landwirtschaftlichen Erntemaschine zugeordneten Schneidwerks in Abhängigkeit von auswählbaren Ernteprozessstrategien optimieren kann. Der hier beschriebene Automat optimiert die Arbeitsparameter konventioneller Getreideschneidwerke und hängt von der Vorauswahl einer bestimmten Prozessstrategie ab. Das in EP 3 132 711 A1 offenbarte Fahrerassistenzsystem eignet sich hervorragend für die Optimierung von Arbeitsparametern konventioneller Schneidwerke in unterschiedlichsten Erntebedingungen. Nachteilig ist, dass dieser Automat an die speziellen Arbeitsaggregate eines konventionellen Schneidwerks gekoppelt ist und die Optimierung der Arbeitsorgane an Ernteprozessstrategien gebunden ist, wobei die Ernteprozessstrategien von einem Bedienerwunsch abhängen und unter Umständen in den vorherrschenden Erntebedingungen nicht optimal umgesetzt werden können. Das Assistenzsystem kann hier die Optimierung nicht in den optimalsten Bereich lenken, wenn dieser optimalste Bereich von der gewählten Prozessstrategie nicht erfasst wird.

Weiter sind die hier in Rede stehenden Bandschneidwerke ebenfalls hinlänglich aus dem Stand der Technik bekannt, etwa aus EP 2 422 606 B1. Es ist auch gemäß EP 3 286 999 B1 bekannt, die Bandgeschwindigkeiten des Mittenbandes und der diesem seitlich zugehordneten Querförderbänder aufeinander und auf die Fahrgeschwindigkeit der Erntemaschine abgestimmt zu regeln. Nachteilig ist hier, dass die komplexen Zusammenhänge der Vielzahl von Arbeitsparametern eines Bandschneidwerks, welche alle einen Einfluss auf einen optimierten verlustarmen Gutfluss im Bandschneidwerk haben unberücksichtigt bleiben, da nur die Bandgeschwindigkeiten aufeinander abgestimmt werden.

Es ist deshalb Aufgabe der Erfindung die beschriebenen Nachteile des Standes der Technik zu vermeiden und insbesondere ein Bandschneidwerk zu schaffen, welches einen optimierten verlustarmen Transport des Erntegutes durch das Bandschneidwerk in den Schrägförderer der landwirtschaftlichen Erntemaschine ermöglicht.

Diese Aufgabe wird erfindungsgemäß durch die kennzeichnenden Merkmale des Anspruchs 1 gelöst.

Indem die landwirtschaftliche Erntemaschine mit einem als Bandschneidwerk ausgebildeten Erntevorsatz zum Schneiden und Aufnehmen von Erntegut und mit einem Fahrerassistenzsystem zur Ansteuerung des Bandschneidwerks ausgerüstet ist, wobei das Fahrerassistenzsystem einen Speicher zum Hinterlegen von Daten und eine Rechenvorrichtung zur Verarbeitung der in dem Speicher hinterlegten Daten umfasst und das Bandschneidwerk mindestens ein Mittenband zur Förderung von Erntegut zu einer Querförderschnecke und/oder zu einem Einzugskanal eines Schrägförderers und mindestens ein linksseitig und ein rechtsseitig zu dem Mittenband angeordnetes Querförderband zur Förderung des Erntegutes zum Mittenband umfasst, wobei das Mittenband, das linksseitige und das rechtsseitige Querförderband in Fahrtrichtung hinter einem Messerbalken angeordnet sind und das Bandschneidwerk obenseitig eine Haspel aufnimmt, wobei das Bandschneidwerk zusammen mit dem Fahrerassistenzsystem einen Bandschneidwerkautomat bildet, indem im Speicher des Fahrerassistenzsystems Kennfelder hinterlegt sind und die Rechenvorrichtung dazu eingerichtet ist mittels der hinterlegten Kennfelder den Bandschneidwerkautomat als Kennfeldsteuerung zu betreiben und der Bandschneidwerkautomat eingerichtet ist, Arbeitsparameter des Bandschneidwerks zu optimieren und die optimierten Arbeitsparameter dem Bandschneidwerk vorzugeben, wird sichergestellt, dass das Bandschneidwerk einen optimierten verlustarmen Transport des Erntegutes durch das Bandschneidwerk in den Schrägförderer der landwirtschaftlichen Erntemaschine ermöglicht.

In einer vorteilhaften Ausgestaltung der Erfindung bilden das rechtsseitige und das linksseitige Querförderband, das Mittenband, die Einzugswalze, die Haspel und/oder der Messerbalken Prozessaggregate des Bandschneidwerks, wobei der Bandschneidwerkautomat eingerichtet ist die Arbeitsparameter eines oder mehrerer dieser Prozessaggregate zu optimieren und die optimierten Arbeitsparameter dem jeweiligen Prozessaggregat vorzugeben. Dies hat den Effekt, dass der Gutfluss im Bandschneidwerk umfassend optimiert werden kann, da alle wesentlichen Prozessaggregate des Bandschneidwerks von dem Bandschneidwerksautomaten kennlinienbasiert steuerbar sind. Dies hat zudem den Effekt, dass sich bei optimiertem Gutfluss niedrigere Schneidwerksverluste einstellen.

Indem in einer vorteilhaften Ausgestaltung der Erfindung der Bandschneidwerkautomat eingerichtet ist, prozessaggregat-spezifische Teilautomaten in der Weise auszubilden, dass der Bandschneidwerkautomat einen oder mehrere Querförderbandautomaten, einen Mittenbandautomat, einen Haspelautomat, einen Messerbalkenautomat und/oder einen Einzugswalzenautomat ausbildet und die jeweiligen Teilautomaten eingerichtet sind die Arbeitsparameter der Querförderbänder, des Mittenbandes, der Haspel, des Messerbalkens und/oder der Einzugswalze des Bandschneidwerks zu optimieren und die optimierten Arbeitsparameter dem jeweiligen Prozessaggregat des Bandschneidwerks vorzugeben, wird sichergestellt, dass die Gutflussoptimierung im Bandschneidwerk ganz spezifisch, nämlich Prozessaggregat-abhängig beeinflusst werden kann.

In einer vorteilhaften Ausgestaltung der Erfindung sind das eine oder die mehreren dem Bandschneidwerkautomaten zugeordneten Kennfelder so beschaffen, dass sie den Zusammenhang von Arbeitsparametern eines Prozessaggregats und Qualitätsparametern beschreiben. Dies hat insbesondere den Effekt, dass der Einfluss jedes einzelnen Prozessaggregates auf die Gutflussoptimierung im Bandschneidwerk gezielt gesteuert werden kann. In diesem Zusammenhang ist es von Vorteil, wenn jedem Teilautomaten ein oder mehrere Kennfelder zugeordnet sind, wobei das eine oder die mehreren Kennfelder zumindest den Zusammenhang von Arbeitsparametern des dem jeweiligen Teilautomaten zugeordneten Prozessaggregats und Qualitätsparametern beschreiben. Auf diese Weise wird es möglich, dass jedes Prozessaggregat des Bandschneidwerks ganz spezifisch gesteuert werden kann, da erfahrungsgemäß die einzelnen Prozessaggregate ganz unterschiedlichen Einfluss auf den Gutfluss im Bandschneidwerk haben.

Den wesentlichsten Einfluss auf die Bewegung eines Erntegutstroms durch ein Bandschneidwerk hat der Erntegutdurchsatz, wobei sehr hohe oder sehr niedrige Erntegutdurchsätze häufig Störungen im Gutfluss innerhalb des Bandschneidwerkes oder bei der Übergabe des Erntegutstromes an den Mähdrescher hervorrufen. Daher ist es von besonderem Vorteil, wenn das jeweilige Kennfeld einen den Erntegutdurchsatz repräsentierenden Parameter, vorzugsweise die Schichthöhe, berücksichtigt.

Vor dem Hintergrund, dass die Bewegungsgeschwindigkeit des Erntegutstromes durch das Bandschneidwerk maßgeblich von der Bandgeschwindigkeit der rechts- und linksseitigen Querförderbänder und des Mittenbandes bestimmt wird, ist in vorteilhafter Weiterbildung der Erfindung vorgesehen, dass der zu optimierende Arbeitsparameter des Prozessaggregats "rechtsseitiges Querförderband" zumindest die Bandgeschwindigkeit des rechtsseitigen Querförderbandes, der zu optimierende Arbeitsparameter des Prozessaggregats "linksseitiges Querförderband" zumindest die Bandgeschwindigkeit des linksseitigen Querförderbandes und der zu optimierende Arbeitsparameter des Prozessaggregats Mittenband zumindest die Bandgeschwindigkeit des Mittenbandes umfasst.

Die einem Bandschneidwerk zugeordnete Haspel ist so beschaffen, dass sie auch eine Förderwirkung auf den Erntegutstrom im Bandschneidwerk ausübt, sodass in einer weiteren vorteilhaften Ausgestaltung der Erfindung vorgesehen ist, dass der zu optimierende Arbeitsparameter des Prozessaggregats Haspel zumindest die Haspelvertikalposition und/oder die Haspelhorizontalposition umfasst.

Der das Bandschneidwerk durchlaufende Erntegutstrom wird in einem Mittenbereich des Bandschneidwerks von einer sogenannten Einzugswalze erfasst und an den Mähdrescher, hier zunächst den Schrägförderschacht übergeben. Damit auch bei der Übergabe des Erntegutstromes vom Bandschneidwerk an den Schrägförderer ein optimaler Gutfluss erhalten bleibt ist in einer weiteren vorteilhaften Ausgestaltung vorgesehen, dass der zu optimierende Arbeitsparameter des Prozessaggregats Einzugswalze zumindest die Einzugswalzenhorizontalposition und/oder die Einzugswalzendrehzahl umfasst.

Ein nicht an die jeweiligen Erntebedingungen und die Fahrgeschwindigkeit der Erntemaschine angepasster, von dem Messerbalken vorgenommener Schnitt des Erntegutes kann bereits beim Eintritt des Erntegutstromes in das Bandschneidwerk zu Gutstauerscheinungen führen, sodass in einer vorteilhaften Ausgestaltung vorgesehen ist, dass der zu optimierende Arbeitsparameter des Prozessaggregats Messerbalken zumindest die Schnittgeschwindigkeit und/oder den Messerhub umfasst.

Es ist vorgesehen, dass der oder die Qualitätsparameter des einen oder der mehreren Kennfelder ein Schwingungskoeffizient und/oder ein Abscheideverlust sind, wobei der Schwingungskoeffizient ein Indikator für die Schichthöhenschwankungen und damit für einen inhomogenen Gutfluss ist, während der Abscheideverlust ein wesentlicher, die Arbeitsqualität eines Mähdreschers beschreibender Parameter ist, wobei zunehmende Abscheideverluste auch ein Hinweis auf einen nicht optimalen Gutfluss des Erntegutstromes durch den Mähdrescher sind.

Indem der Schwingungskoeffizient eine Schwankung des Erntegutdurchsatzes beschreibt und Mittel vorgesehen sind, die einen Erntegutdurchsatz und den die Schwankung des Erntegutdurchsatzes beschreibenden Schwingungskoeffizient in einem vor den Dreschorganen der landwirtschaftlichen Erntemaschine liegenden Bereich ermitteln, wird in einer vorteilhaften Weiterbildung der Erfindung sichergestellt, dass der einen inhomogenen Gutfluss am eindeutigsten beschreibende Parameter bei der Optimierung des Gutflusses im Bandschneidwerk maßgebend berücksichtigt wird. Indem der Schwingungskoeffizient zudem in einem vor den Dreschorganen liegenden Bereich ermittelt wird kann zudem der die Gutstromstruktur völlig verändernde Einfluss der Dreschorgane ausgeschlossen werden.

In einer vorteilhaften Ausgestaltung der Erfindung umfasst der weitere Qualitätsparameter den Abscheideverlust, da dieser den Kornverlust beschreibt und der Kornverlust ein die Arbeitsqualität der landwirtschaftlichen Erntemaschine maßgeblich bestimmender Parameter ist.

In einer vorteilhaften Weiterbildung der Erfindung beschreibt daher das jeweilige Kennfeld den jeweiligen Arbeitsparameter in Abhängigkeit vom Schwingungskoeffizienten und der den Erntegutdurchsatz repräsentierenden Schichthöhe. In diesem Zusammenhang ist es daher auch von Vorteil, wenn in einer weiteren Ausgestaltungsvariante das jeweilige Kennfeld den oder die zu optimierenden jeweiligen Arbeitsparameter zumindest in Abhängigkeit vom Abscheideverlust beschreibt.

Vor dem Hintergrund, dass die Kennfelder Parameterzusammenhänge in einem großen hier räumlichen Wertebereich beschreiben ist in einer vorteilhaften Ausgestaltung der Erfindung vorgesehen, dass dem jeweiligen Kennfeld eine Steuerkennlinie zugeordnet ist und die Steuerkennlinie im Bereich des Minimums des jeweiligen Schwingungskoeffizienten oder Abscheideverlusts liegt. Dies vereinfacht das Verfahren in dem Kennfeld für einen zu optimierenden Arbeitsparameter den optimalsten Wert zu ermitteln.

Eine besonders effiziente Anwendung einer kennlinienbasierten Kennfeldsteuerung ergibt sich dann, wenn das jeweilige Kennfeld als Initialkennfeld ausgeführt ist, wobei in dem Initialkennfeld zumindest der Zusammenhang von Arbeitsparametern eines Prozessaggregats und Qualitätsparametern durch Initialarbeitspunkte beschrieben wird, im Erntebetrieb in Abhängigkeit von Messgrößen Momentan-Arbeitspunkte ermittelt werden, die Momentan-Arbeitspunkte in quasistationäre Arbeitspunkte umgerechnet werden und die ermittelten quasistationären Arbeitspunkte die korrespondierenden Arbeitspunkte des jeweiligen Kennfeldes überschreiben, sodass das Initialkennfeld in ein aktualisiertes Kennfeld gewandelt wird. In diesem Zusammenhang ist es von Vorteil, wenn die Messgrößen die Längsschwingung und/oder die Querschwingung eines die landwirtschaftliche Erntemaschine durchlaufenden Erntegutstromes und/oder die Bestandshöhe und/oder den Hydraulikdruck oder Leistungsbedarf eines Haspelantriebsmotors umfassen.

Ein wirkungsvolles Arbeiten der Kennfeldsteuerung ergibt sich zudem dann, wenn die Messgrößen unmittelbar in die Qualitätsparameter oder einen Erntegutdurchsatz umgerechnet werden.

Um den Einfluss von Messfehlern in Grenzen zu halten, ist in einer vorteilhaften Ausgestaltung der Erfindung vorgesehen, dass der momentane Arbeitspunkt in einen quasistationären Arbeitspunkt übergeht, wenn eine oder mehrere Messgrößen innerhalb eines Zeitintervalls, vorzugsweise innerhalb eines Zeitintervalls von 6 Sekunden annähernd konstant bleiben. In diesem Zusammenhang ist es auch von Vorteil, wenn das Zeitintervall so bemessen ist, dass ein Totzeitintervall in der Messkette kompensiert wird, wobei das Totzeitintervall maßgeblich von der halben Schneidwerksbreite und der Fördergeschwindigkeit des Gutstroms bestimmt wird, da es mit zunehmender Schneidwerksbreite länger dauert bis der Erntegutstrom im Bereich der sogenannten Schichthöhenwalze detektiert werden kann.

Eine effiziente Kennfeldsteuerung ergibt sich in einer Ausgestaltung dann, wenn das Kennfeld den Zusammenhang zwischen dem Qualitätsparameter Schwingungskoeffizient, dem den Erntegutdurchsatz repräsentierenden Parameter Schichthöhe und dem Arbeitsparameter "Bandgeschwindigkeit Mittenband" beschreibt und die dem Kennfeld zugeordnete Steuerkennlinie im Bereich des Minimums des Schwingungskoeffizienten liegt.

Eine effiziente Kennfeldsteuerung wird auch dann erreicht, wenn gemäß einer weiteren Ausgestaltung das Kennfeld den Zusammenhang zwischen dem Qualitätsparameter Schwingungskoeffizient, dem den Erntegutdurchsatz repräsentierenden Parameter Schichthöhe und dem Arbeitsparameter "Bandgeschwindigkeit rechtsseitiges und/oder linksseitiges Querförderband" beschreibt und die dem Kennfeld zugeordnete Steuerkennlinie im Bereich des Minimums des Schwingungskoeffizienten liegt.

In diesem Zusammenhang ist es auch von Vorteil, wenn das Kennfeld den Zusammenhang zwischen dem Qualitätsparameter Schwingungskoeffizient, dem den Erntegutdurchsatz repräsentierenden Parameter Schichthöhe und dem Arbeitsparameter Haspelhorizontalposition und/oder Haspelvertikalposition beschreibt und die dem Kennfeld zugeordnete Steuerkennlinie im Bereich des Minimums des Schwingungskoeffizienten liegt.

Vor dem Hintergrund, dass ein nicht optimaler Gutfluss im Bereich des Bandschneidwerkes auch negative Auswirkungen auf den Abscheideverlust hat ist in einer vorteilhaften Ausgestaltung der Erfindung vorgesehen, dass das Kennfeld den Zusammenhang zwischen dem Qualitätsparameter Abscheideverlust und den Arbeitsparametern Geschwindigkeit Mittenband und Geschwindigkeit linksseitiges und/oder rechtsseitiges Querförderband beschreibt und die dem Kennfeld zugeordnete Steuerkennlinie im Bereich des Minimums des Abscheideverlusts liegt. In diesem Zusammenhang ist es auch von Vorteil, wenn das Kennfeld den Zusammenhang zwischen dem Qualitätsparameter Abscheideverlust, dem den Erntegutdurchsatz repräsentierenden Parameter Hydraulikdruck oder Leistungsbedarf eines Haspelantriebsmotors/ Haspelantriebszylinders und dem Arbeitsparameter Haspelhorizontalposition und/oder Haspelvertikalposition beschreibt und die dem Kennfeld zugeordnete Steuerkennlinie im Bereich des Minimums des Abscheideverlusts liegt.

Indem in einer vorteilhaften Ausgestaltung die Anpassung des jeweiligen Kennfeldes in Abhängigkeit vom Schwingungskoeffizienten eine schnelle, eine dynamische Anpassung des jeweiligen Kennfeldes bewirkt während die Anpassung des jeweiligen Kennfeldes in Abhängigkeit vom Abscheideverlust eine langsame, eine träge Anpassung des jeweiligen Kennfeldes bewirkt kann sichergestellt werden, dass der Einfluss sowohl kurzfristiger als auch langfristiger Effekte bei der Optimierung der Arbeitsparameters des Bandschneidwerks berücksichtigt wird.

Ein besonders effektiv arbeitendes Fahrerassistenzsystem wird dann erreicht, wenn in einer vorteilhaften Ausgestaltung der Erfindung das Bandschneidwerk zusammen mit dem

Fahrerassistenzsystem einen Bandschneidwerkautomat bildet, der eingerichtet ist als Kennfeldsteuerung betrieben zu werden, indem im Speicher des Fahrerassistenzsystems Kennfelder hinterlegt sind und die Rechenvorrichtung dazu eingerichtet ist mittels der hinterlegten Kennfelder den Bandschneidwerkautomat als Kennfeldsteuerung zu betreiben und dass das Fahrerassistenzsystem weiter eingerichtet ist
a. Messgrößen des Bandschneidwerks und/oder der landwirtschaftlichen Arbeitsmaschine zu ermitteln
b. zumindest aus den ermittelten Messgrößen Momentan-Arbeitspunkte abzuleiten
c. den Momentan-Arbeitspunkt in einen quasistationären Arbeitspunkt umzurechnen
d. den quasistationären Arbeitspunkt an den jeweiligen Bandschneidwerkautomat oder einen oder mehrere Teilautomaten zu übergeben
e. in dem jeweiligen Bandschneidwerkautomat oder Teilautomat an das dort jeweils hinterlegte Initialkennfeld oder das bereits aktualisierte Kennfeld zu übergeben
f. in dem jeweiligen Kennfeld einen Initialarbeitspunkt oder einen bereits aktualisierten Arbeitspunkt durch einen quasistationären Arbeitspunkt zu ersetzen
g. unter Berücksichtigung der eingefügten quasistationären Arbeitspunkte ein aktualisiertes Kennfeld zu berechnen
h. die Steuerkennlinie des aktualisierten Kennfeldes zu ermittelt
i. mittels der aktualisierten Steuerkennlinie optimierte Arbeitsparameter zu ermitteln
k. den jeweils optimierten Arbeitsparameter dem jeweiligen Prozessaggregat vorzugeben.

Um den Einfluss kurzfristiger und langfristiger Effekte auf die Optimierung eines Arbeitsparameters hinreichend zu berücksichtigen ist in einer weiteren vorteilhaften Ausgestaltung der Erfindung vorgesehen, dass die Adaption des Kennfeldes eine Überlagerung einer dynamischen Kennfeldadaption "Schwingungskoeffizient" und einer trägen Kennfeldadaption "Abscheideverlust" umfasst. In diesem Zusammenhang ist es von Vorteil, wenn die dynamische Kennfeldadaption dadurch bewirkt wird, dass der Qualitätsparameter des jeweiligen Kennfeldes von dem Schwingungskoeffizienten gebildet wird, da dieser sehr präzise und in einem nahe zum Bandschneidwerk gelegenen Bereich Schichthöhenschwankungen erfasst. Indem die träge Kennfeldadaption dadurch bewirkt wird, dass der Qualitätsparameter des jeweiligen Kennfeldes von dem Abscheideverlust gebildet wird, wird sichergestellt, dass auch langfristige Effekte bei der Optimierung der Arbeitsparameter der Prozessaggregate des Bandschneidwerks berücksichtigt werden.

Vor dem Hintergrund, dass ein und derselbe zu optimierende Arbeitsparameter in den hinterlegten Kennfeldern in Abhängigkeit von unterschiedlichen Qualitätsparametern definiert wird ist in einer vorteilhaften Ausgestaltung der Erfindung vorgesehen, dass das Fahrerassistenzsystem in einen Prüfschritt prüft, ob sich für die zu optimierenden Arbeitsparameter bei Anwendung der dynamischen Kennfeldadaption und der trägen Kennfeldadaption gegenläufige Tendenzen für den Wert des jeweils optimierten Arbeitsparameters einstellen. In diesem Zusammenhang ist es von Vorteil, wenn anhand von Randbedingungen entschieden wird, welches Kennfeldoptimum und/oder mittleres Kennfeldoptimum angefahren wird. Die erwähnten Randbedingungen werden in einer vorteilhaften Ausgestaltung in einer Kostenfunktion hinterlegt, welche in einer vorteilhaften Ausgestaltung die Parameter Durchsatz/h, Schwingungskoeffizient, Abscheideverluste, Schneidwerksverluste berücksichtigt, wobei diese Parameter unterschiedlich gewichtet sein können.

Die Qualität der Kennfeldsteuerung kann auch dadurch noch gesteigert werden, wenn in einer vorteilhaften Weiterbildung der Erfindung das Fahrerassistenzsystem bei der Generierung der jeweiligen Kennfelder Expertenwissen berücksichtigt.

Das Fahrerassistenzsystem kann vor allem dann sehr wirkungsvoll eingesetzt werden, wenn zumindest der Messerbalken und die ihm nachgeordneten Querförderbänder flexibel ausgebildet sind, da diese optimierte Anpassung der Prozessaggregate an Bodenkonturen eine signifikante Auswirkung auf den Gutfluss im Bandschneidwerk haben, da sich dessen Bodenbereich sowohl in Längs- als auch Querrichtung ständig ändern kann.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: einen nur teilweise dargestellten Mähdrescher mit Bandschneidwerk
- Figur 2: eine Detailansicht des Bandschneidwerks nach Figur 1
- Figur 3: eine schematische Darstellung des erfindungsgemäßen Fahrerassistenzsystems
- Figur 4: eine erste Detaildarstellung der erfindungsgemäßen Kennfelder
- Figur 5: eine zweite Detaildarstellung der erfindungsgemäßen Kennfelder
- Figur 6: eine Detaildarstellung der erfindungsgemäßen Kennfeldadaption
- Figur 6a: Detailerläuterungen zu Figur 6
- Figur 7: eine schematische Darstellung der Arbeitsweise des erfindungsgemäßen Fahrerassistenzsystems

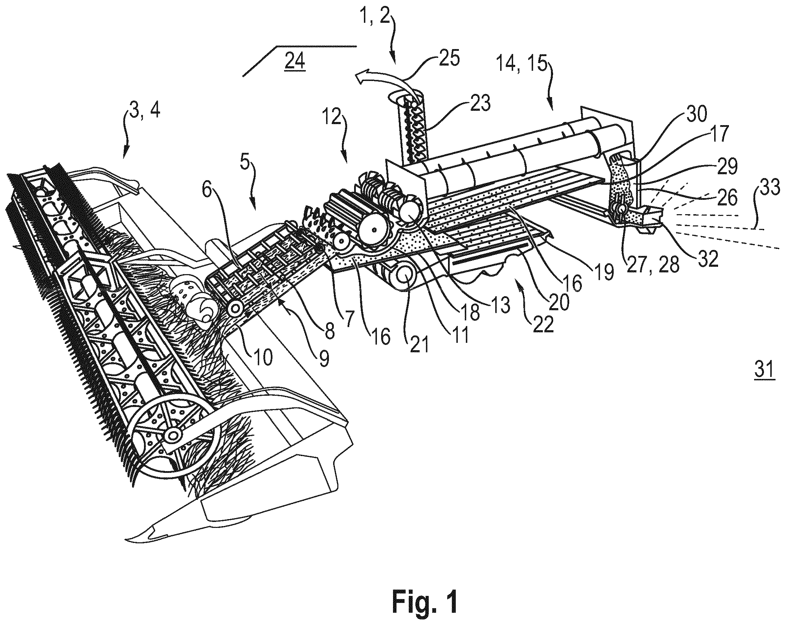

Die in Fig. 1 schematisch dargestellte, als Mähdrescher 2 ausgeführte landwirtschaftliche Arbeitsmaschine 1 nimmt in ihrem frontseitigen Bereich einen als Bandschneidwerk 4 ausgeführten Erntevorsatz 3 auf, welcher in an sich bekannter Weise mit dem Schrägförderer 5 des Mähdreschers 2 verbunden ist. Die Förderorgane 6 des Schrägförderers 5 werden obenseitig um eine Schwenkachse 7 quer zur Längsrichtung des Mähdreschers 2 schwenkbeweglich geführt. Im dargestellten Ausführungsbeispiel sind den Förderorganen 6 in einem mittigen Bereich eine sogenannte an sich bekannte, später aber noch näher erläuterte Schichthöhenwalze 8 zugeordnet, deren Auslenkung in vertikaler Richtung ein Maß für die Schichthöhe 9 des den Schrägförderer 5 durchlaufenden Erntegutstroms 10 ist. Der den Schrägförderer 5 durchlaufende Erntegutstrom 10 wird in dem obenseitigen, rückwärtigen Bereich des Schrägförderers 5 an die untenseitig zumindest teilweise von einem sogenannten Dreschkorb 11 ummantelten Dreschorgane 12 des Mähdreschers 2 übergeben. Eine den Dreschorganen 12 nachgeordnete Umlenktrommel 13 lenkt den im rückwärtigen Bereich der Dreschorgane 12 aus diesen austretenden Gutstrom 10 so um, dass er unmittelbar an eine als Abscheiderotoranordnung 14 ausgeführte Trenneinrichtung 15 übergeben wird. Es liegt im Rahmen der Erfindung, dass die Trenneinrichtung 15 auch als an sich bekannter und deshalb nicht dargestellter Hordenschüttler ausgeführt sein kann. Auch liegt es im Rahmen der Erfindung, dass die Trenneinrichtung nur einrotorig ausgeführt ist oder die Dreschorgane 12 und die Trenneinrichtung 15 zu einer ein- oder zweirotorigen Axialflussdresch- und Trenneirichtung zusammengefasst sind.

In der Trenneinrichtung 15 wird der Gutstrom 10 so gefördert, dass in dem Gutstrom 10 enthaltene freibewegliche Körner 16 im untenseitigen Bereich der Trenneinrichtung 15 abgeschieden werden. Sowohl die am Dreschkorb 11 als auch in der Trenneinrichtung 15 abgeschiedenen Körner 16 werden über Rücklaufboden 17 und Zuführboden 18 einer aus mehreren Siebebenen 19, 20 und einem Gebläse 21 bestehenden Reinigungseinrichtung 22 zugeführt. Der gereinigte Körnerstrom 25 wird schließlich mittels Elevatoren 23 an einen Korntank 24 übergeben.

Im rückwärtigen Bereich der Trenneinrichtung 15 ist dieser eine von einem trichterförmigen Gehäuse 26 ummantelte, als Strohhäcksler 27 ausgeführte Zerkleinerungseinrichtung 28 zugeordnet. Dem Strohhäcksler 27 wird obenseitig das die Trenneinrichtung 15 im rückwärtigen Bereich verlassende Stroh 30 zugeführt. Mittels einer verschwenkbaren Strohleitklappe 29 kann das Stroh 30 auch so umgelenkt werden, dass es direkt auf dem Boden 31 in einem Schwad abgelegt wird.

Im Austrittsbereich des Strohhäckslers 27 werden der aus dem zerkleinerten Stroh 30 bestehende Gutstrom und die in der Reinigungseinrichtung 22 abgeschiedenen Nichtkornbestandteile an eine Gutverteileinrichtung 32 übergeben, welche den Restmaterialstrom 33 so abgibt, dass es zu einer Breitverteilung des Restmaterialstroms 33 auf dem Boden 31 kommt.

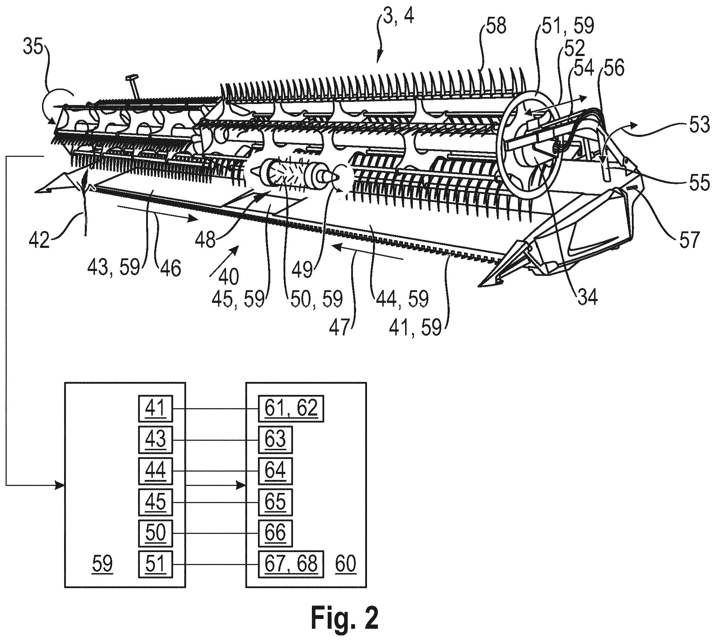

Figur 2 zeigt die erfindungswesentlichen Details des als Bandschneidwerk 4 ausgeführten Erntevorsatzes 3. Im Erntegut-eingangseitigen Bereich 40 nimmt das Bandschneidwerk 4 einen entweder starr oder flexibel ausgeführten Messerbalken 41 auf, der den zu erntenden Pflanzenbestand 42 abtrennt. Ein flexibel ausgeführter Messerbalken 41 kann dabei in bekannter Weise Bodenkonturänderungen in Längs- und Querrichtung besser folgen. Dem Messerbalken 41 sind im dargestellten Ausführungsbeispiel in Pfeilrichtung 40 gesehen ein linksseitiges Querförderband 43, ein rechtsseitiges Querförderband 44 und ein Mittenband 45 zugeordnet. Das linksseitige Querförderband 43 fördert den von ihm erfassten abgeernteten Pflanzenbestand 42 gemäß Pfeilrichtung 46 in Richtung des Mittenbandes 45 und übergibt ihn an dieses. In analoger Weise fördert das rechtsseitige Querförderband 44 den von ihm erfassten abgeernteten Pflanzenbestand 42 gemäß Pfeilrichtung 47 ebenfalls in Richtung des Mittenbandes 45 und übergibt ihn an dieses. Das Mittenband 45 fördert sodann den von ihm erfassten und von den Querförderbändern 43, 44 an das Mittenband 45 übergebenen Pflanzbestand 42 in den rückwärtigen Bereich des Bandschneidwerks 4 gemäß Pfeilrichtung 48. In diesem rückwärtigen Bereich wird der Pflanzenbestand 42 von einer diesem Bereich zugeordneten gemäß Pfeilrichtung 49 rotierenden Einzugswalze 50 erfasst und als der bereits erwähnte Erntegutstrom 10 an den Schrägförderer 5 übergeben. Obenseitig nimmt das Bandschneidwerk 4 eine ein- oder mehrteilig ausgeführte Haspel 51 auf. Die Position der Haspel 51 kann in an sich bekannter Weise horizontal gemäß Pfeilrichtung 52 und vertikal gemäß Pfeilrichtung 53 angepasst werden, im einfachsten Fall sind für die Umsetzung dieser Bewegungen 52, 53 Hubzylinder 54, 55 am Haspeltragarm 56 und am Rahmen 57 des Bandschneidwerks 4 positioniert. Die Hubzylinder 54, 55 sind jeweils an beiden Seiten des Bandschneidwerks 4 angeordnet. Zudem ist die Position der Mitnahmezinken 58 der Haspel 51 in an sich bekannter und daher nicht näher erläuterter Weise einstellbar. Zudem ist der Haspel 51 zumindest einseitig ein Haspelantriebsmotor 34 zugeordnet, der die Haspel 51 gemäß Pfeilrichtung 35 in eine Drehbewegung versetzt. Erfindungsgemäß bilden der Messerbalken 41, das linksseitige und das rechtseitige Querförderband 43, 44, das Mittenband 45, die Einzugswalze 50 und die Haspel 51 die jeweiligen Prozessaggregate 59 des Bandschneidwerks 4. Jedem dieser Prozessaggregate 59 sind Arbeitsparameter 60 zugeordnet, wobei der Arbeitsparameter des Messerbalkens 41 die Schnittgeschwindigkeit 61 und/oder der Messerhub 62, der Arbeitsparameter des linksseitigen Querförderbandes 43, des rechtsseitigen Querförderbandes 44 sowie des Mittenbandes 45 die jeweilige Bandgeschwindigkeit 63 - 65, der Arbeitsparameter der Einzugswalze 50 die Einzugswalzenhorizontalposition 66 und/oder die Einzugswalzendrehzahl 49 und der Arbeitsparameter der Haspel 51 die Haspelvertikalposition 67 und/oder die Haspelhorizontalposition 68 ist.

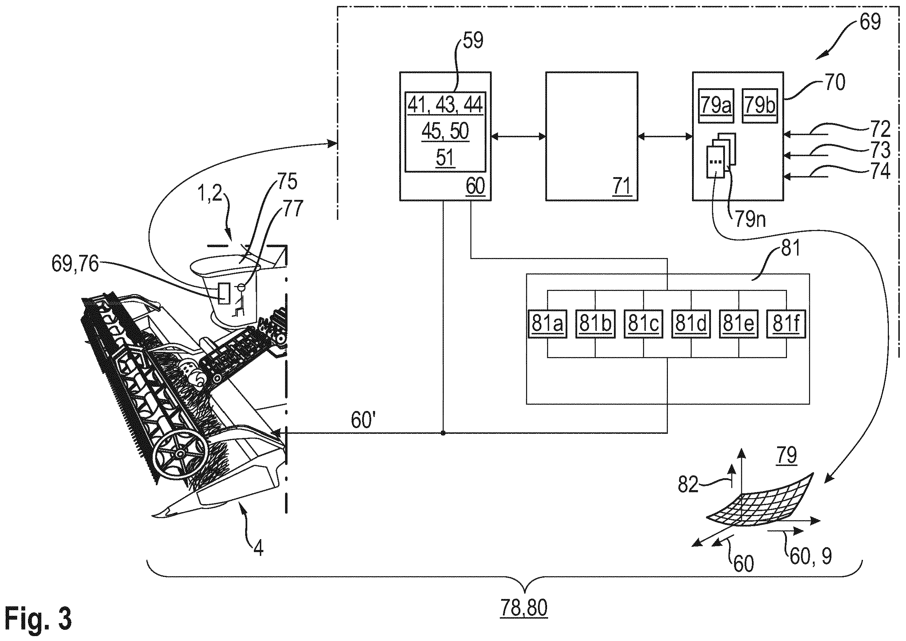

Gemäß Figur 3 weist die vorschlagsgemäße landwirtschaftliche Arbeitsmaschine 1 ein Fahrerassistenzsystem 69 zur Ansteuerung des Bandschneidwerks 4 auf. Das Fahrerassistenzsystem 69 umfasst einen Speicher 70 zum Hinterlegen von noch näher zu erläuternden Daten und eine Rechenvorrichtung 71 zur Verarbeitung der in dem Speicher 70 hinterlegten Daten. Die in dem Speicher 70 hinterlegten Daten können zunächst von maschineninternen Sensorsystemen generierte Informationen 72, von extern Systemen generierte Information 73 und unmittelbar in der Recheneinrichtung hinterlegte Informationen 74 umfassen. Das Fahrerassistenzsystem 69 kann über eine in der Kabine 75 des Mähdreschers 2 angeordneten Bedien- und Anzeigeneinheit 76 betrieben werden. Grundsätzlich ist das Fahrerassistenzsystem 69 dazu eingerichtet, einen Fahrer 77 des Mähdreschers 2 bei der Bedienung des Mähdreschers 2 zu unterstützen.

Wesentlich ist nun, dass das Bandschneidwerk 4 zusammen mit dem Fahrerassistenzsystem 69 einen Bandschneidwerkautomaten 78 bildet. Dies ist vorschlagsgemäß dadurch realisiert, dass im Speicher 70 des Fahrerassistenzsystems 69 noch detailliert zu beschreibende Kennfelder 79 hinterlegt sind und die Rechenvorrichtung 71 dazu eingerichtet ist mittels der hinterlegten Kennfelder 79 den Bandschneidwerkautomat 78 als Kennfeldsteuerung 80 zu betreiben und der Bandschneidwerkautomat 78 eingerichtet ist, Arbeitsparameter 60 des Bandschneidwerks 4 zu optimieren und die optimierten Arbeitsparameter 60' dem Bandschneidwerk 4 vorzugeben, wobei gemäß den vorherigen Ausführungen die Arbeitsparameter 60 Prozessaggregaten 59 des Bandschneidwerks 4 zugeordnet sind und die Prozessaggregate 59 im Wesentlichen das rechtsseitige und das linksseitige Querförderband 43, 44, das Mittenband 45, die Einzugswalze 50, die Haspel 51 und/oder den Messerbalken 41 umfassen. Auf diese Weise ist der Bandschneidwerkautomat 78 eingerichtet, die Arbeitsparameter 60 eines oder mehrerer dieser Prozessaggregate 59 zu optimieren und die optimierten Arbeitsparameter 60' dem jeweiligen Prozessaggregat 41, 43, 44, 45, 50, 51 vorzugeben.

Zudem kann der Bandschneidwerkautomat 78 so eingerichtet sein, dass er prozessaggregat-spezifische Teilautomaten 81 in der Weise ausbildet, dass der Bandschneidwerkautomat 78 einen oder mehrere Querförderbandautomaten 81a, b, einen Mittenbandautomat 81c, einen Haspelautomat 81d, einen Messerbalkenautomat 81e und/oder einen Einzugswalzenautomat 81f ausbildet und die jeweiligen Teilautomaten 81a..f eingerichtet sind die Arbeitsparameter 59 der Querförderbänder 43, 44, des Mittenbandes 45, der Haspel 51, des Messerbalkens 41 und/oder der Einzugswalze 50 des Bandschneidwerks 4 zu optimieren und die optimierten Arbeitsparameter 60' dem jeweiligen Prozessaggregat 59 des Bandschneidwerks 4 vorzugeben.

Das eine oder die mehreren dem Bandschneidwerkautomaten 78 zugeordneten Kennfelder 79 sind so beschaffen, dass sie den Zusammenhang von einem oder mehreren Arbeitsparametern 60 eines oder mehrerer Prozessaggregate 59 und noch näher zu erläuternden Qualitätsparametern 82 beschreiben. In Analogie hierzu können auch jedem Teilautomaten 81a...f ein oder mehrere Kennfelder 79 zugeordnet sein, wobei das eine oder die mehreren Kennfelder 79 zumindest den Zusammenhang von einem oder mehreren Arbeitsparametern 60 des dem jeweiligen Teilautomaten 81a..f zugeordneten Prozessaggregats 59 und den noch näher zu erläuternden Qualitätsparametern 82 beschreiben. Das jeweilige dem Bandschneidwerkautomaten 78 oder den Teilautomaten 81 zugeordnete Kennfeld 79 kann zudem einen den Erntegutdurchsatz repräsentierenden Parameter, vorzugsweise die Schichthöhe 9, berücksichtigen.

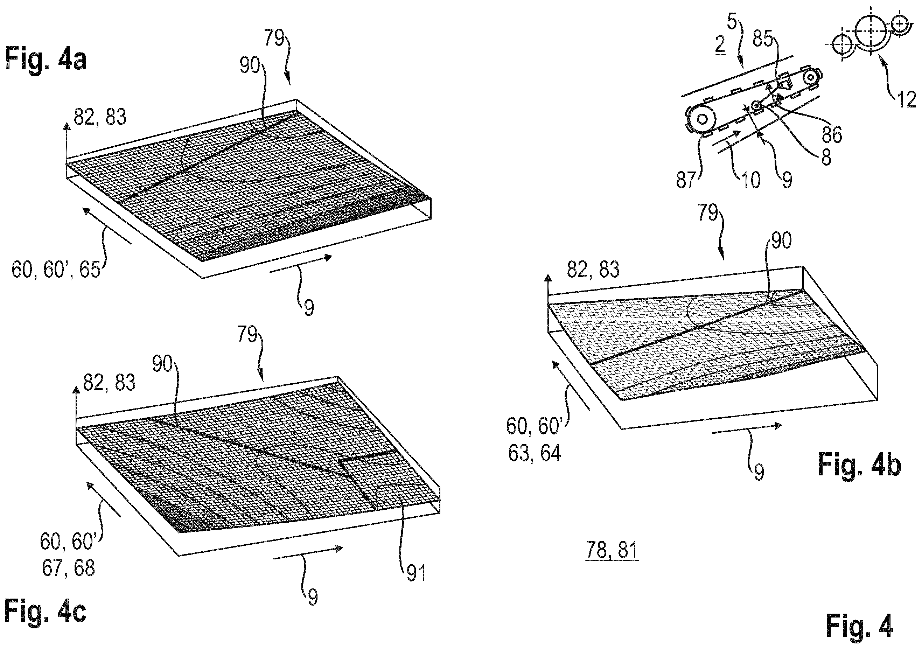

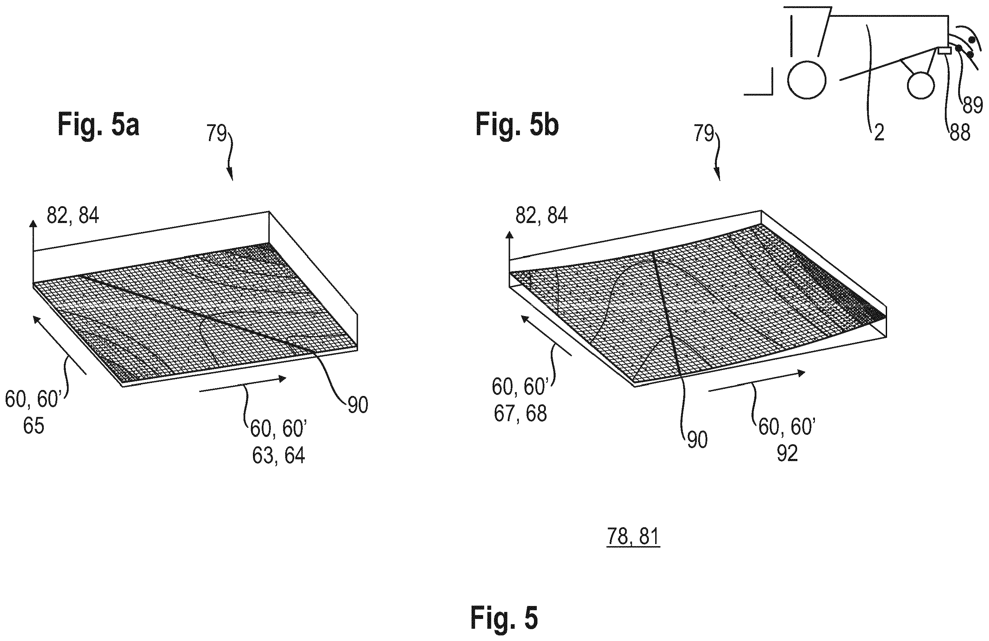

In den Figuren 4 und 5 werden die erfindungsgemäßen Kennfelder 79 in Abhängigkeit von verschiedenen Qualitätsparametern 82 im Detail beschrieben, wobei in Figur 4 der Qualitätsparameter 82 ein noch näher zu erläuternder Schwingungskoeffizient 83 und in Figur 5 der Qualitätsparameter 82 ein ebenfalls noch näher zu erläuternder Abscheideverlust 84 ist. Der aus dem Stand der Technik bekannte Schwingungskoeffizient 83 wird detailliert in EP 3 858 129 A1 beschrieben, deren Offenbarungsgehalt hier durch Bezugnahme vollumfänglich Bestandteil dieser Patentanmeldung wird. Gemäß der Offenbarung der EP 3 858 129 A1 beschreibt der Schwingungskoeffizient 83 eine Schwankung des den Mähdrescher 2 durchlaufenden Erntegutdurchsatzes. Hierfür wird die Schichthöhe 9 des den Mähdrescher 2 im Bereich des Schrägförderers 5 durchlaufenden Erntegutstroms 10 in Abhängigkeit von der Zeit aufgezeichnet. Die ermittelte Schichthöhenschwankung wird sodann gemäß dem in EP 3 858 129 offenbarten Verfahren in den erfindungsgemäßen Schwingungskoeffizienten 83 umgerechnet. Die Schichthöhe 9 wird in einem vor den Dreschorganen 12 liegenden Bereich ermittelt, da der Gutstrom 10 im Bereich der Dreschorgane 12 derart intensiv bearbeitet wird, dass Schichthöhenschwankungen im Erntegutstrom 10 nach Verlassen der Dreschorgane 12 keinen hinreichenden Bezug mehr zum Erntegutdurchsatz haben. Die Schichthöhe 9 wird mittels der bereist erwähnten Schichthöhenwalze 8 im Bereich des Schrägförderers 5 ermittelt, wobei die Schichthöhenwalze 8 um eine Schwenkachse 85 schwenkbeweglich geführt wird und die Auslenkung 86 der Schichthöhenwalze 8 als Maß für die Ermittlung der Schichthöhe 9 herangezogen wird. In an sich bekannter Weise ist die Schichthöhenwalze 8 so oberhalb der die Gutmitnahme bewirkenden Schrägförderleisten 87 positioniert, das deren schichthöhenabhängige Bewegung auf die Schichthöhenwalze 8 übertragen wird und die Auslenkung 86 der Schichthöhenwalze 8 bewirkt.

Der weitere Qualitätsparameter 82, gemäß Figur 5 der Abscheideverlust 84, beschreibt den Kornverlust 89, nämlich die aus dem Mähdrescher 2 in dessen rückwärtigen Bereich austretenden Verlustkörner. In der Regel wird der Kornverlust 89 im rückwärtigen Bereich des Mähdreschers 2 in an sich bekannter Weise mittels geeigneter und hinlänglich bekannter Kornverlustsensoren 88, in der Regel sogenannte Klopfsensoren, ermittelt.

Die in dem Bandschneidwerkautomaten 78 und/oder den Teilautomaten 81 hinterlegten Kennfelder 79 könne je nachdem welche Art der Optimierung umgesetzt werden soll ganz unterschiedlich strukturiert sein. Gemäß Figur 4 kann das jeweilige Kennfeld 79 den jeweiligen Arbeitsparameter 60 in Abhängigkeit vom Schwingungskoeffizienten 83 und den Erntegutdurchsatz durch die den Erntegutdurchsatz repräsentierende Schichthöhe 9 beschreiben. Gemäß Figur 5 kann das jeweilige Kennfeld 79 den oder die jeweiligen Arbeitsparameter 60 zumindest in Abhängigkeit vom Abscheideverlust 84 beschreiben.

Damit das jeweilige Kennfeld 79 die beschriebene Kennfeldsteuerung 80 ermöglicht, in deren Ergebnis der Bandschneidwerkautomat 78 und/oder die Teilautomaten 81 optimierte Arbeitsparameter 60' generieren, ist jedem Kennfeld 79 eine Steuerkennlinie 90 zugeordnet, die sich in dem jeweiligen Kennfeld 79 entlang des Minimums des jeweiligen Schwingungskoeffizienten 83 oder des Abscheideverlusts 84 erstreckt und den jeweils optimalen Arbeitsparameters 60' beschreibt.

In einer Ausgestaltung nach Figur 4a beschreibt das Kennfeld 79 den Zusammenhang zwischen dem Qualitätsparameter Schwingungskoeffizient 83, dem den Erntegutdurchsatz repräsentierenden Parameter Schichthöhe 9 und dem Arbeitsparameter 60 "Bandgeschwindigkeit Mittenband" 65, wobei die dem Kennfeld 79 zugeordnete Steuerkennlinie 90 im Bereich des Minimums des Schwingungskoeffizienten 83 liegt. Tendenziell kann man erkennen, dass die Kennfeldsteuerung 80 hier so beschaffen ist, dass größere Schichthöhen 9 höhere Bandgeschwindigkeiten 65 benötigen, während zu hohe oder zu niedrige Bandgeschwindigkeiten 65 den Schwingungskoeffizienten 83 und damit einen optimierten Arbeitsparameter 60' tendenziell eher negativ beeinflussen.

In einer Ausgestaltung nach Figur 4b beschreibt das Kennfeld 79 den Zusammenhang zwischen dem Qualitätsparameter Schwingungskoeffizient 83, dem den Erntegutdurchsatz repräsentierenden Parameter Schichthöhe 9 und dem Arbeitsparameter 60 "Bandgeschwindigkeit rechtsseitiges und/oder linksseitiges Querförderband" 63, 64, wobei die dem Kennfeld 79 zugeordnete Steuerkennlinie 90 im Bereich des Minimums des Schwingungskoeffizienten 83 liegt. Tendenziell kann man erkennen, dass die Kennfeldsteuerung 80 hier ähnlich der nach Figur 4a beschaffen ist, wobei die jeweiligen Einflüsse, dass größere Schichthöhen 9 höhere Bandgeschwindigkeiten 63, 64 benötigen, während zu hohe oder zu niedrige Bandgeschwindigkeiten 63, 64 den Schwingungskoeffizienten 83 und damit einen optimierten Arbeitsparameter 60' tendenziell eher negativ beeinflussen, intensiver ausgeprägt sind.

In einer Ausgestaltung nach Figur 4c beschreibt das Kennfeld 79 den Zusammenhang zwischen dem Qualitätsparameter Schwingungskoeffizient 83, dem den Erntegutdurchsatz repräsentierenden Parameter Schichthöhe 9 und dem Arbeitsparameter 60 "Haspelhorizontalposition und/oder Haspelvertikalposition" 67, 68, wobei die dem Kennfeld 79 zugeordnete Steuerkennlinie 90 im Bereich des Minimums des Schwingungskoeffizienten 83 liegt. Man kann erkennen, dass die Kennfeldsteuerung 80 hier keiner ausgeprägten Tendenz folgt, sondern sehr spezifisch von den ins Verhältnis gesetzten Parametern abhängen. Aufgrund dessen, dass eine Positionsänderung 67, 68 der Haspel 51 sehr komplexen Zusammenhängen folgt, erstreckt sich hier die Steuerkennlinie 90 nicht durch alle Bereiche des Kennfeldes 79, sondern in speziellen Randbereichen 90 wird die Steuerkennlinie 90 durch Expertenwissen 91 ersetzt.

In einer Ausgestaltung nach Figur 5a beschreibt das Kennfeld 79 den Zusammenhang zwischen dem Qualitätsparameter Abscheideverlust 84 und den Arbeitsparametern 60 "Bandgeschwindigkeit Mittenband" 65 und "Bandgeschwindigkeit linksseitiges und/oder rechtsseitiges Querförderband" 63, 64, wobei die dem Kennfeld 79 zugeordnete Steuerkennlinie 90 im Bereich des Minimums des Abscheideverlusts 84 liegt. Tendenziell zeigt sich, dass der Einfluss der Bandgeschwindigkeiten 63-65 auf den Abscheideverlust 84 moderat ausfällt und im Wesentlichen alle Bandgeschwindigkeiten 63-65 die gleiche Tendenz aufweisen, nämlich steigt oder sinkt die Bandgeschwindigkeit 63, 64 der linksseitiges und/oder rechtsseitiges Querförderbänder 43, 44 steigt oder sinkt auch die optimierte Bandgeschwindigkeit 65 des Mittenbandes 45 und umgekehrt.

In einer Ausgestaltung nach Figur 5b beschreibt das Kennfeld 79 den Zusammenhang zwischen dem Qualitätsparameter Abscheideverlust 84, dem den Erntegutdurchsatz repräsentierenden Parameter "Hydraulikdruck oder Leistungsbedarf eines Haspelantriebsmotors/ Haspelantriebszylinders" 92 und dem Arbeitsparameter 60 "Haspelhorizontalposition und/oder Haspelvertikalposition" 67, 68, wobei die dem Kennfeld 79 zugeordnete Steuerkennlinie 90 im Bereich des Minimums des Abscheideverlusts 84 liegt. Tendenziell ist erkennbar, dass mit zunehmendem Hydraulikdruck 92, d.h. mit zunehmendem Durchsatz oder einem höher gewachsenen Pflanzenbestand 42, eine größere Haspelhöhe 67, 68 zu niedrigeren Abscheideverlusten 84 führt.

Aufgrund dessen, dass der Abscheideverlust 84 erst ermittelt wird, wenn der entsprechende Erntegutstrom 10 den Mähdrescher 2 vollständig durchlaufen hat und der von der detektierten Schichthöhe 9 abhängige Erntegutdurchsatz bereits unmittelbar nach dem Eintritt des Erntegutstromes 10 in den Mähdrescher 2 ermittelt wird, führte die Anpassung des jeweiligen Kennfeldes 79 in Abhängigkeit vom Schwingungskoeffizienten 83 zu einer schnelle Anpassung des jeweiligen Kennfeldes 79, während die Anpassung des jeweiligen Kennfeldes 79 in Abhängigkeit vom Abscheideverlust 84 eine langsamere Anpassung des jeweiligen Kennfeldes 79 bewirkt.

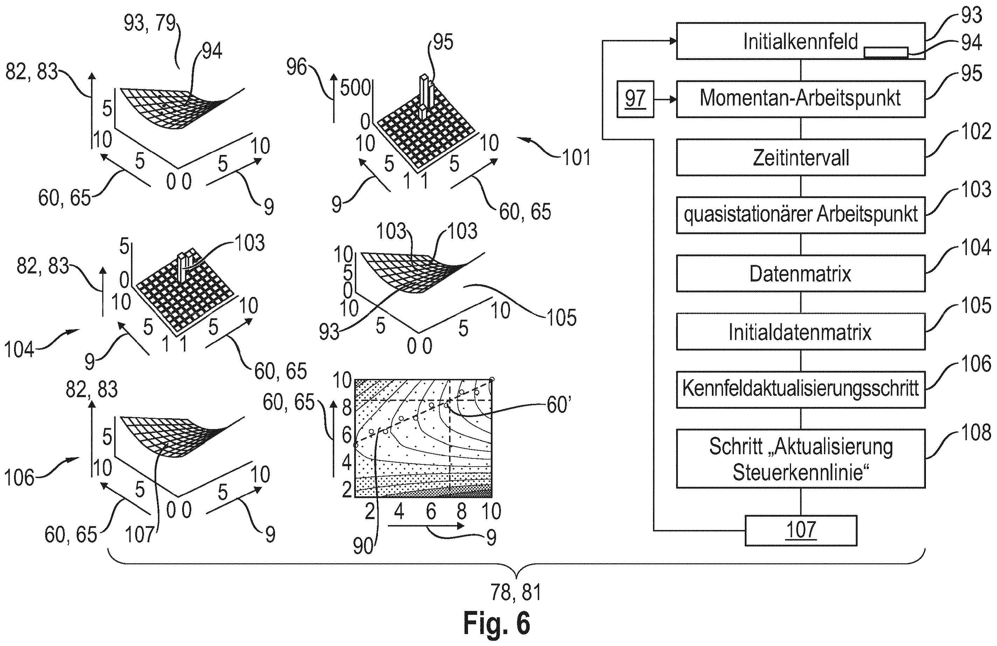

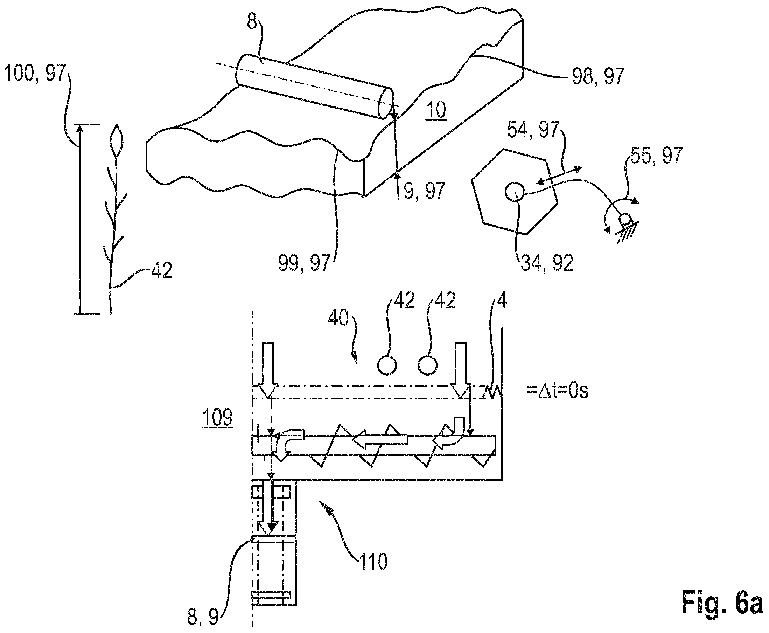

Das Prinzip der Kennfeldgenerierung wird in Figur 6 am Beispiel des Kennfeldes 79 nach Figur 4a beispielhaft beschrieben. Jedes der in den Figuren 4 und 5 beschriebenen Kennfelder 79 wird nach diesem Prinzip erstellt. Das Kennfeld 79 ist in dem Bandschneidwerkautomaten 78 und/oder den Teilautomaten 81 als Initialkennfeld 93 hinterlegt, wobei in dem Initialkennfeld 93 der beschriebene Zusammenhang von Arbeitsparametern 60, hier der Bandgeschwindigkeit 65 des Prozessaggregats 59 Mittenband 45, und Qualitätsparametern 82, hier dem Schwingungskoeffizient 83 und dem erntegutdurchsatz-bezogenen Parameter Schichthöhe 9 durch Initialarbeitspunkte 94 abgebildet wird. Im Erntebetrieb des Mähdreschers 2 werden Momentan-Arbeitspunkte 95 für die Schichthöhe 9 und die Arbeitsparameter 60, hier die Bandgeschwindigkeit 65 des Mittenbandes 45 in Abhängigkeit von der Zeit 96 ermittelt. Zur Ermittlung der Momentan-Arbeitspunkte 95 werden Messgrößen 97 herangezogen, die gemäß Figur 6a vorzugsweise eine Längsschwingung 98 und/oder eine Querschwingung 99 eines die landwirtschaftliche Erntemaschine 1 durchlaufenden Erntegutstromes 10 und/oder eine Bestandshöhe 100 des Pflanzenbestandes 42 und/oder ein Hydraulikdruck 92 oder Leistungsbedarf eines Haspelantriebsmotors 34 sind. Die Messgröße Längsschwingung 98 entspricht dabei der bereits beschriebenen mittels Schichthöhenwalze 8 ermittelten Schichthöhe 9 in Abhängigkeit von der Zeit.

Mithin sind die Messgrößen 97 so beschaffen, dass aus ihnen die Qualitätsparameter 82 Schwingungskoeffizient 83 und Abscheideverlust 84 sowie die durchsatzproportionale Schichthöhe 9 abgeleitet werden können.

Die ermittelten Momentan-Arbeitspunkte 95 werden in einer Datenmatrix 101 zwischengespeichert, wobei die Änderung des Wertes des jeweiligen Momentan-Arbeitspunktes 95 innerhalb eines Zeitintervalls 102 ermittelt wird und der Momentan-Arbeitspunkt 95 dann in einen quasistationären Arbeitspunkt 103 überführt wird, wenn sein Wert annährend unverändert, vorzugsweise konstant bleibt. Ein bevorzugtes Zeitintervall 102 kann hier bei sechs Sekunden liegen. Das Zeitintervall 102 soll vorzugsweise zumindest so lang sein, dass es ein Totzeitintervall 109 in der Messkette 110 kompensiert. Beispielsweise erreicht der in dem ernteguteingangsseitigen Bereich 40 in das Bandschneidwerk 4 eintretende Pflanzenbestand 42 die beschriebene Schichthöhenwalze 8 erst nach einer bestimmten Zeit. Dieser zeitliche Versatz zwischen Guteintritt und Messung der Schichthöhe 9, der maßgeblich von der Arbeitsbreite des Bandschneidwerks 4 und der Gutfördergeschwindigkeit abhängt, wird in dem besagten Totzeitintervall 109 berücksichtigt (Fig. 6a).

Die ermittelten quasistationären Arbeitspunkte 103 werden sodann in einer Datenmatrix 104 gesammelt. Sind in der Datenmatrix 104 eine bestimmte Anzahl quasistationärer Arbeitspunkte 103 gesammelt, vorzugsweise vier quasistationäre Arbeitspunkte 103, werden in dieser Datenmatrix 104 für die gesammelten quasistationären Arbeitspunkte 103 in Analogie zum jeweiligen Initialkennfeld 93 die Abhängigkeiten zwischen Qualitätsparameter 82, hier Schwingungskoeffizient 83, durchsatzproportionaler Schichthöhe 9 und dem Arbeitsparameter 60, hier Bandgeschwindigkeit 65 des Prozessaggregats Mittenband 45, ermittelt. Die quasistationären Arbeitspunkte 103 werden in einem nächsten Schritt in eine Initialdatenmatrix 105 übernommen, die dem Initialkennfeld 93 mit übernommenen quasistationären Arbeitspunkten 103 entspricht. Sodann wird in einem Kennfeldaktualisierungsschritt 106 das aktualisierte Kennfeld 107 berechnet, welches das Initialkennfeld 93 ersetzt. Damit auch das aktualisierte Kennfeld 107 die beschriebene Kennfeldsteuerung 80 ermöglicht, in deren Ergebnis der Bandschneidwerkautomat 78 und/oder die Teilautomaten 81 optimierte Arbeitsparameter 60' generieren, wird für jedes aktualisierte Kennfeld 107 in einem Schritt "Aktualisierung Steuerkennlinie" 108 die Steuerkennlinie 90 neu berechnet, die sich in dem jeweils aktualisierten Kennfeld 107 entlang des Minimums des jeweiligen Schwingungskoeffizienten 83 oder des Abscheideverlusts 84 erstreckt und den jeweils optimalen Arbeitsparameter 60' beschreibt.

Das jeweils aktualisierte Kennfeld 107 bildet in dem jeweiligen Bandschneidwerkautomaten 78 und/oder dem jeweiligen Teilautomaten 81 sodann wieder das jeweilige Initialkennfeld 93 für einen folgenden Kennfeldanpassungsprozess.

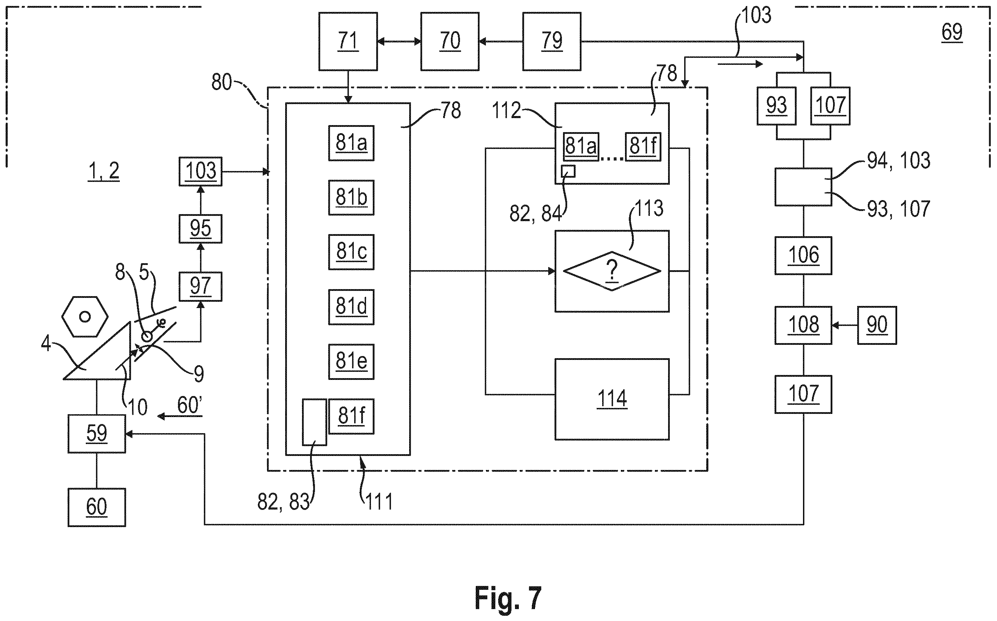

Figur 7 beschreibt schließlich das erfindungsgemäße Fahrerassistenzsystem 69 im Zusammenhang. Gemäß den vorhergehenden Ausführungen bildet das Bandschneidwerk 4 zusammen mit dem Fahrerassistenzsystem 69 einen Bandschneidwerkautomat 78, der zugleich Teilautomaten 81a..f umfassen kann. Indem im Speicher 70 des Fahrerassistenzsystems 69 Kennfelder 79 hinterlegt sind und die Rechenvorrichtung 71 dazu eingerichtet ist mittels der hinterlegten Kennfelder 79 den Bandschneidwerkautomat 78 und/oder die Teilautomaten 81a..f als Kennfeldsteuerung 80 zu betreiben, sind der Bandschneidwerkautomat 78 und/oder die Teilautomaten 81a..f in der Lage, Arbeitsparameter 60 der Prozessaggregate 59 des Bandschneidwerks 4 zu optimieren und die optimierten Arbeitsparameter 60' den Prozessaggregaten 59 des Bandschneidwerks 4 vorzugeben. Hierfür ermittelt das Fahrerassistenzsystem 69 in einem ersten Schritt die beschriebenen Messgrößen 97 des Bandschneidwerks 4 und der landwirtschaftlichen Erntemaschine 1. Zumindest aus den ermittelten Messgrößen 97 generierte das erfindungsgemäße Fahrerassistenzsystem 69 sodann die Momentan-Arbeitspunkte 95 des Bandschneidwerkautomaten 78 und/oder der Teilautomaten 81a..f. In einem nächsten Datenverarbeitungsschritt rechnet das Fahrerassistenzsystem 69 die Momentan-Arbeitspunkte 95 in der zuvor beschriebenen Weise in quasistationäre Arbeitspunkte 103 um und übergibt diese quasistationären Arbeitspunkte 103 sodann an den Bandschneidwerkautomaten 78 und/oder die Teilautomaten 81a..f. Die von dem Bandschneidwerkautomaten 78 und/oder den jeweiligen Teilautomaten 81a..f realisierte Kennfeldsteuerung 80 ist so beschaffen, dass die quasistationären Arbeitspunkte 103 an das jeweils hinterlegte bereits beschriebene Initialkennfeld 93 oder das bereits aktualisierte Kennfeld 107 übergeben werden. In dem jeweiligen Kennfeld 93, 107 wird sodann der dort hinterlegte Initialarbeitspunkt 94 durch den quasistationären Arbeitspunkt 103 ersetzt. Dabei wird, wie beschrieben, zunächst eine Anzahl quasistationärer Arbeitspunkte 103 in das jeweilige Kennfeld 93, 107 übernommen, wobei jeder dieser quasistationären Arbeitspunkte 103 einen Initialarbeitspunkt 94 ersetzt. Sodann wird ein Kennfeldaktualisierungsschritt 106 gestartet, der dazu führt, dass das jeweilige Kennfeld 93, 107 auf Basis der ermittelten quasistationären Arbeitspunkte 103 neu berechnet wird. In dem darauffolgenden Verfahrensschritt "Aktualisierung Steuerkennlinie" 108 wird eine neue Steuerkennlinie 90 des jeweiligen Kennfeldes 93, 107 ermittelt und letztlich bildet das auf diese Weise neu ermittelte Kennfeld und zugehörige Steuerkennlinie 90 das jeweils aktualisierte Kennfeld 107. Das Fahrerassistenzsystem 69 ermittelt sodann anhand des aktualisierten Kennfeldes 107 die jeweiligen, bereits beschriebenen optimierten Arbeitsparameter 60' und gibt diese dem jeweiligen Prozessaggregat 59 vor.

Die Kennfeldsteuerung 80 des Bandschneidwerkautomaten 78 und/oder der Teilautomaten 81a...f ist zudem so beschaffen, dass sie eine schnelle, eine dynamische Kennfeldadaption 111 und eine träge Kennfeldadaption 112 zulässt. Eine dynamische Kennfeldadaption 111 wird dann erreicht, wenn der Qualitätsparameter 82 des jeweiligen Kennfeldes 79 von dem beschriebene Schwingungskoeffizient 83 gebildet wird. Der Qualitätsparameter Schwingungskoeffizient 83 lässt deshalb eine schnelle, dynamische Kennfeldsteuerung 80 zu, da dieser Qualitätsparameter 82 von der im Schrägförderer 5 positionierten Schichthöhenwalze 8 detektierten Schichthöhe 9 abhängt und unmittelbar nach Eintritt des Erntegutstromes 10 in die landwirtschaftliche Arbeitsmaschine 1 bestimmt wird. Demgegenüber stellt sich die träge Kennfeldadaption 112 dadurch ein, dass der Qualitätsparameter 82 des jeweiligen Kennfeldes 79 von dem bereits beschriebenen Abscheideverlust 84 gebildet wird und dieser erst gemessen wird, wenn der Restmaterialstrom 33 und die in ihm enthaltenen Verlustkörner die landwirtschaftliche Arbeitsmaschine 1 in deren rückwärtigen Bereich verlassen. Obgleich zu einem späten Zeitpunkt generiert hat die träge Kennfeldadaption 112 den Vorteil, dass sie einen Parameter, hier den Abscheideverlust 84 detektiert, der maßgeblich die Arbeitsqualität der landwirtschaftlichen Arbeitsmaschine 1 bestimmt und hohe Abscheideverluste 84 immer auch ein Indikator für einen nicht optimalen Gutfluss in der landwirtschaftlichen Arbeitsmaschine 1 sind, wobei einem nicht optimalen Gutfluss in der landwirtschaftlichen Arbeitsmaschine 1 insbesondere dadurch entgegengewirkt werden kann, wenn der Erntevorsatz 3, hier das Bandschneidwerk 4, einen homogenen Erntegutstrom 10 erzeugt, der dann kontinuierlich an die landwirtschaftliche Arbeitsmaschine 1 übergeben wird.

Zudem kann das Fahrerassistenzsystem 69 so beschaffen sein, dass die Kennfeldsteuerung 80 einen Prüfschritt 113 umfasst, in welchem geprüft wird, ob sich für die zu optimierenden Arbeitsparameter 60 bei Anwendung der dynamischen Kennfeldadaption 111 und der trägen Kennfeldadaption 112 gegenläufige Tendenzen für den Wert des jeweils optimierten Arbeitsparameters 60' einstellen. Ist dies der Fall ist in einer vorteilhaften Ausgestaltung der Erfindung vorgesehen, dass anhand von Randbedingungen entschieden wird, welcher Arbeitspunkt, der sich aus der Steuerkennlinie ergibt angefahren wird. Die erwähnten Randbedingungen werden in einer vorteilhaften Ausgestaltung in einer Kostenfunktion hinterlegt, welche in einer vorteilhaften Ausgestaltung die Parameter Durchsatz/h, Schwingungskoeffizient, Abscheideverluste, Schneidwerksverluste betrachtet, wobei diese Parameter unterschiedlich gewichtet sein können

Weiter ist das Fahrerassistenzsystem 69 so beschaffen, das es bei der Generierung der jeweiligen Kennfelder 79, wobei dies sowohl die Initialkennfelder 93 als auch die aktualisierten Kennfelder 107 sein können, Expertenwissen 114 berücksichtigt.

**Bezugszeichenliste:**

| | | | |
|---|---|---|---|
| 1 | landwirtschaftliche Arbeitsmaschine | 34 | Haspelantriebsmotor |
| 2 | Mähdrescher | 35 | Pfeilrichtung |
| 3 | Erntevorsatz | | |
| 4 | Bandschneidwerk | 40 | ernteguteingangsseitiger Bereich |
| 5 | Schrägförderer | 41 | Messerbalken |
| 6 | Förderorgane | 42 | Pflanzenbestand |
| 7 | Schwenkachse | 43 | linksseitiges Querförderband |
| 8 | Schichthöhenwalze | 44 | rechtsseitiges Querförderband |
| 9 | Schichthöhe | 45 | Mittenband |
| 10 | Erntegutstrom | 46-49 | Pfeilrichtung |
| 11 | Dreschkorb | 50 | Einzugswalze |
| 12 | Dreschorgan | 51 | Haspel |
| 13 | Umlenktrommel | 52-53 | Pfeilrichtung |
| 14 | Abscheiderotoranordnung | 54,55 | Hubzylinder |
| 15 | Trenneinrichtung | 56 | Haspeltragarm |
| 16 | Körner | 57 | Rahmen |
| 17 | Rücklaufboden | 58 | Mitnahmezinken |
| 18 | Zuführboden | 59 | Prozessaggregat |
| 19 | Siebebene | 60 | Arbeitsparameter |
| 20 | Siebebene | 60' | optimierter Arbeitsparameter |
| 21 | Gebläse | 61 | Schnittgeschwindigkeit |
| 22 | Reinigungseinrichtung | 62 | Messerhub |
| 23 | Elevator | 63-65 | Bandgeschwindigkeit |
| 24 | Korntank | 66 | Einzugswalzenhorizontalposition |
| 25 | Körnerstrom | 67 | Haspelvertikalposition |
| 26 | Gehäuse | 68 | Haspelhorizontalposition |
| 27 | Strohhäcksler | 69 | Fahrerassistenzsystem |
| 28 | Zerkleinerungseinrichtung | 70 | Speicher |
| 29 | Strohleitklappe | 71 | Rechenvorrichtung |
| 30 | Stroh | 72 | interne Informationen |
| 31 | Boden | 73 | externe Informationen |
| 32 | Gutverteileinrichtung | 74 | hinterlegte Informationen |
| 33 | Restmaterialstrom | 75 | Kabine |
| 76 | Bedien- und Anzeigeeinheit | 109 | Totzeitintervall |
| 77 | Fahrer | 110 | Messkette |
| 78 | Bandschneidwerkautomat | 111 | dynamische Kennfeldadaption |
| 79 | Kennfeld | 112 | träge Kennfeldadaption |
| 80 | Kennfeldsteuerung | 113 | Prüfschritt |
| 81 | Teilautomat | 114 | Expertenwissen |
| 82 | Qualitätsparameter | | |
| 83 | Schwingungskoeffizient | | |
| 84 | Abscheideverlust | | |
| 85 | Schwenkachse | | |
| 86 | Auslenkung | | |
| 87 | Schrägförderleisten | | |
| 88 | Kornverlustsensor | | |
| 89 | Kornverlust | | |
| 90 | Steuerkennlinie | | |
| 91 | Expertenwissen | | |
| 92 | Hydraulikdruck | | |
| 93 | Initialkennfeld | | |
| 94 | Initialarbeitspunkt | | |
| 95 | Momentan-Arbeitspunkt | | |
| 96 | Zeit | | |
| 97 | Messgröße | | |
| 98 | Längsschwingung | | |
| 99 | Querschwingung | | |
| 100 | Bestandshöhe | | |
| 101 | Datenmatrix | | |
| 102 | Zeitintervall | | |
| 103 | quasistationärer Arbeitspunkt | | |
| 104 | Datenmatrix | | |
| 105 | Initialdatenmatrix | | |
| 106 | Kennfeldaktualisierungsschritt | | |
| 107 | aktualisiertes Kennfeld | | |
| 108 | Schritt "Aktualisierung Steuerkennlinie" | | |

## Patentansprüche

1. Landwirtschaftliche Erntemaschine (1) mit einem als Bandschneidwerk (4) ausgebildeten Erntevorsatz (3) zum Schneiden und Aufnehmen von Erntegut und mit einem Fahrerassistenzsystem (69) zur Ansteuerung des Bandschneidwerks (4), wobei das Fahrerassistenzsystem (69) einen Speicher (70) zum Hinterlegen von Daten und eine Rechenvorrichtung (71) zur Verarbeitung der in dem Speicher (70) hinterlegten Daten umfasst und das Bandschneidwerk (4) mindestens ein Mittenband (45) zur Förderung von Erntegut zu einer Einzugswalze (50) und/oder zu einem Einzugskanal eines Schrägförderers (5) und mindestens ein linksseitig und ein rechtsseitig zu dem Mittenband (45) angeordnetes Querförderband (43, 44) zur Förderung des Erntegutes zum Mittenband (45) umfasst, wobei das Mittenband (45), das linksseitige und das rechtsseitige Querförderband (51) in Fahrtrichtung hinter einem Messerbalken (41) angeordnet sind und das Bandschneidwerk (4) obenseitig eine Haspel (51) aufnimmt wobei das Bandschneidwerk (4) zusammen mit dem Fahrerassistenzsystem (69) einen Bandschneidwerkautomat (78) bildet, indem im Speicher (70) des Fahrerassistenzsystems (69) Kennfelder (79) hinterlegt sind und die Rechenvorrichtung (71) dazu eingerichtet ist mittels der hinterlegten Kennfelder (79) den Bandschneidwerkautomat (78) als Kennfeldsteuerung (80) zu betreiben und der Bandschneidwerkautomat (78) eingerichtet ist, Arbeitsparameter (60) des Bandschneidwerks (4) zu optimieren und die optimierten Arbeitsparameter (60') dem Bandschneidwerk (4) vorzugeben, wobei das eine oder die mehreren Kennfelder (79) den Zusammenhang von einem oder mehreren Arbeitsparametern (60) und einem Qualitätsparameter (82) beschreiben **dadurch gekennzeichnet, dass** der oder die Qualitätsparameter (82) des einen oder der mehreren Kennfelder (79) ein Schwingungskoeffizient (83) oder ein Abscheideverlust (84) ist.

2. Landwirtschaftliche Erntemaschine (1) mit einem als Bandschneidwerk (4) ausgebildeten Erntevorsatz (3) nach Anspruch 1,
**dadurch gekennzeichnet, dass**
zumindest das rechtsseitige und das linksseitige Querförderband (43, 44), das Mittenband (45), die Einzugswalze (50), die Haspel (51) und/oder der Messerbalken (41) Prozessaggregate (59) des Bandschneidwerks (4) bilden und der Bandschneidwerkautomat (78) eingerichtet ist die Arbeitsparameter (60) eines oder mehrerer dieser Prozessaggregate (59) zu optimieren und die optimierten Arbeitsparameter (60') dem jeweiligen Prozessaggregat (59) vorzugeben.

3. Landwirtschaftliche Erntemaschine (1) mit einem als Bandschneidwerk (4) ausgebildeten Erntevorsatz (3) nach Anspruch 2,
**dadurch gekennzeichnet, dass**
der Bandschneidwerkautomat (78) eingerichtet ist, prozessaggregat-spezifische Teilautomaten (80a..f) in der Weise auszubilden, dass der Bandschneidwerkautomat (78) einen oder mehrere Querförderbandautomaten (80a, b), einen Mittenbandautomat (80c), einen Haspelautomat (80d), einen Messerbalkenautomat (80e) und/oder einen Einzugswalzenautomat (80f) ausbildet und die jeweiligen Teilautomaten (80a..f) eingerichtet sind die Arbeitsparameter (60) der Querförderbänder (43, 44), des Mittenbandes (45), der Haspel (51), des Messerbalkens (41) und/oder der Einzugswalze (50) des Bandschneidwerks (4) zu optimieren und die optimierten Arbeitsparameter (60') dem jeweiligen Prozessaggregat (59) des Bandschneidwerks (4) vorzugeben.

4. Landwirtschaftliche Erntemaschine (1) mit einem als Bandschneidwerk (4) ausgebildeten Erntevorsatz (3) nach einem der Ansprüche 2-3,
**dadurch gekennzeichnet, dass**
das ein oder die mehreren dem Bandschneidwerkautomat (78) zugeordneten Kennfelder (79) den Zusammenhang von Arbeitsparametern (60) eines Prozessaggregats (59) und Qualitätsparametern (82) beschreiben.

5. Landwirtschaftliche Erntemaschine (1) mit einem als Bandschneidwerk (4) ausgebildeten Erntevorsatz (3) nach Anspruch 3,
**dadurch gekennzeichnet, dass**
jedem Teilautomat (80a..f) ein oder mehrere Kennfelder (79) zugeordnet sind, wobei das eine oder die mehreren Kennfelder (79) zumindest den Zusammenhang von Arbeitsparametern (60) des dem jeweiligen Teilautomat (80a..f) zugeordneten Prozessaggregats (59) und Qualitätsparametern (82) beschreiben.

6. Landwirtschaftliche Erntemaschine (1) mit einem als Bandschneidwerk (4) ausgebildeten Erntevorsatz (3) nach zumindest einem der Ansprüche 4 und 5,
**dadurch gekennzeichnet, dass**
das jeweilige Kennfeld (79) einen den Erntegutdurchsatz repräsentierenden Parameter, vorzugsweise die Schichthöhe (9), berücksichtigt.

7. Landwirtschaftliche Erntemaschine (1) mit einem als Bandschneidwerk (4) ausgebildeten Erntevorsatz (3) nach einem der Ansprüche 2-6,
**dadurch gekennzeichnet, dass**
der Arbeitsparameter (60) des Prozessaggregats "rechtsseitiges Querförderband" (44) zumindest die Bandgeschwindigkeit (64) des rechtsseitigen Querförderbandes (44) umfasst.

8. Landwirtschaftliche Erntemaschine (1) mit einem als Bandschneidwerk (4) ausgebildeten Erntevorsatz (3) nach einem der vorhergehenden Ansprüche,
**dadurch gekennzeichnet, dass**
der Arbeitsparameter (69) des Prozessaggregats "linksseitiges Querförderband" (43) zumindest die Bandgeschwindigkeit (63) des linksseitigen Querförderbandes (43) umfasst.

9. Landwirtschaftliche Erntemaschine (1) mit einem als Bandschneidwerk (4) ausgebildeten Erntevorsatz (3) nach einem der Ansprüche 2-8,
**dadurch gekennzeichnet, dass**
der Arbeitsparameter (60) des Prozessaggregats Mittenband (45) zumindest die Bandgeschwindigkeit (65) des Mittenbandes (45) umfasst.

10. Landwirtschaftliche Erntemaschine (1) mit einem als Bandschneidwerk (4) ausgebildeten Erntevorsatz (3) nach einem der Ansprüche 2-9,
**dadurch gekennzeichnet, dass**
der Arbeitsparameter (60) des Prozessaggregats Haspel (51) zumindest die Haspelvertikalposition (67) und/oder die Haspelhorizontalposition (68) umfasst.

11. Landwirtschaftliche Erntemaschine (1) mit einem als Bandschneidwerk (4) ausgebildeten Erntevorsatz (3) nach einem der Ansprüche 2-10,
**dadurch gekennzeichnet, dass**
der Arbeitsparameter (60) des Prozessaggregats Einzugswalze (50) zumindest die Einzugswalzenhorizontalposition (66) und/oder Einzugswalzendrehzahl (49) umfasst.

12. Landwirtschaftliche Erntemaschine (1) mit einem als Bandschneidwerk (4) ausgebildeten Erntevorsatz (3) nach einem der Ansprüche 2-11,
**dadurch gekennzeichnet, dass**
der Arbeitsparameter (60) des Prozessaggregats Messerbalken (41) zumindest die Schnittgeschwindigkeit (61) und/oder den Messerhub (62) umfasst.

13. Landwirtschaftliche Erntemaschine (1) mit einem als Bandschneidwerk (4) ausgebildeten Erntevorsatz (3) nach Anspruch 1,
**dadurch gekennzeichnet, dass**
der Schwingungskoeffizient (83) eine Schwankung des Erntegutdurchsatzes beschreibt und Mittel (8) vorgesehen sind, die einen Erntegutdurchsatz und den die Schwankung des Erntegutdurchsatzes beschreibenden Schwingungskoeffizient (83) in einem vor den Dreschorganen (12) der landwirtschaftlichen Erntemaschine (1) liegenden Bereich ermitteln.

14. Landwirtschaftliche Erntemaschine (1) mit einem als Bandschneidwerk (4) ausgebildeten Erntevorsatz (3) nach Anspruch 1,
**dadurch gekennzeichnet, dass**
der Abscheideverlust (84) den Kornverlust beschreibt, nämlich den aus der landwirtschaftlichen Erntemaschine (1) ausgeschiedenen Verlustkornanteil.

15. Landwirtschaftliche Erntemaschine (1) mit einem als Bandschneidwerk (4) ausgebildeten Erntevorsatz (3) nach einem der Ansprüche 1 und 13-14,
**dadurch gekennzeichnet, dass**
das jeweilige Kennfeld (79) den jeweiligen Arbeitsparameter (60) in Abhängigkeit vom Schwingungskoeffizienten (83) und der den Erntegutdurchsatz (84) repräsentierenden Schichthöhe (9) beschreibt.

16. Landwirtschaftliche Erntemaschine (1) mit einem als Bandschneidwerk (4) ausgebildeten Erntevorsatz (3) nach einem der vorhergehenden Ansprüche,
**dadurch gekennzeichnet, dass**
das jeweilige Kennfeld (79) den oder die jeweiligen Arbeitsparameter (60) zumindest in Abhängigkeit vom Abscheideverlust (84) beschreibt.

17. Landwirtschaftliche Erntemaschine (1) mit einem als Bandschneidwerk (4) ausgebildeten Erntevorsatz (3) nach einem der Ansprüche 15 oder 16,
**dadurch gekennzeichnet, dass**
dem jeweiligen Kennfeld (79) eine Steuerkennlinie (90) zugeordnet ist und die Steuerkennlinie (90) im Bereich des Minimums des jeweiligen Schwingungskoeffizienten (83) oder Abscheideverlusts (84) liegt.

18. Landwirtschaftliche Erntemaschine (1) mit einem als Bandschneidwerk (4) ausgebildeten Erntevorsatz (3) nach einem der vorhergehenden Ansprüche,
**dadurch gekennzeichnet, dass**
das jeweilige Kennfeld (79) als Initialkennfeld (93) ausgeführt ist, wobei in dem Initialkennfeld (93) zumindest der Zusammenhang von Arbeitsparametern (60) eines Prozessaggregats (59) und Qualitätsparametern (82) durch Initialarbeitspunkte (94) beschrieben wird, im Erntebetrieb in Abhängigkeit von Messgrößen (97) Momentan-Arbeitspunkte (95) ermittelt werden, die Momentan-Arbeitspunkte (95) in quasistationäre Arbeitspunkte (103) umgerechnet werden und die ermittelten quasistationären Arbeitspunkte (103) die korrespondierenden Arbeitspunkte (94) des jeweiligen Kennfeldes (79) überschreiben, sodass das Initialkennfeld (93) in ein aktualisiertes Kennfeld (107) gewandelt wird.

19. Landwirtschaftliche Erntemaschine (1) mit einem als Bandschneidwerk (4) ausgebildeten Erntevorsatz (3) nach Anspruch 18,
**dadurch gekennzeichnet, dass**
die Messgrößen (97) die Längsschwingung (98) und/oder die Querschwingung (99) eines die landwirtschaftliche Erntemaschine (1) durchlaufenden Erntegutstromes (10) und/oder die Bestandshöhe (42) und/oder den Hydraulikdruck (92) oder Leistungsbedarf eines Haspelantriebsmotors (34) umfassen.

20. Landwirtschaftliche Erntemaschine (1) mit einem als Bandschneidwerk (4) ausgebildeten Erntevorsatz (3) nach einem der Ansprüche 18 oder 19,
**dadurch gekennzeichnet, dass**
die Messgrößen (97) in Qualitätsparameter (82) oder einen Erntegutdurchsatz umgerechnet werden.

21. Landwirtschaftliche Erntemaschine (1) mit einem als Bandschneidwerk (4) ausgebildeten Erntevorsatz (3) nach Anspruch 18,
**dadurch gekennzeichnet, dass**
der momentane Arbeitspunkt (95) in einen quasistationären Arbeitspunkt (103) übergeht, wenn eine oder mehrere Messgrößen (97) innerhalb eines Zeitintervalls (102), vorzugsweise innerhalb eines Zeitintervalls (102) von 6 Sekunden annähernd konstant bleiben.

22. Landwirtschaftliche Erntemaschine (1) mit einem als Bandschneidwerk (4) ausgebildeten Erntevorsatz (3) nach Anspruch 21,
**dadurch gekennzeichnet, dass**
das Zeitintervall (102) so bemessen ist, dass ein Totzeitintervall (109) in der Messkette (110) kompensiert wird.

23. Landwirtschaftliche Erntemaschine (1) mit einem als Bandschneidwerk (4) ausgebildeten Erntevorsatz (3) nach einem der Ansprüche 1 und 13-22,
**dadurch gekennzeichnet, dass**
das Kennfeld (79) den Zusammenhang zwischen dem Qualitätsparameter Schwingungskoeffizient (83), dem den Erntegutdurchsatz repräsentierenden Parameter Schichthöhe (9) und dem Arbeitsparameter "Bandgeschwindigkeit Mittenband" (65) beschreibt und die dem Kennfeld (79) zugeordnete Steuerkennlinie (90) im Bereich des Minimums des Schwingungskoeffizienten (83) liegt.

24. Landwirtschaftliche Erntemaschine (1) mit einem als Bandschneidwerk (4) ausgebildeten Erntevorsatz (3) nach einem der Ansprüche 1 und 13-23,
**dadurch gekennzeichnet, dass**
das Kennfeld (79) den Zusammenhang zwischen dem Qualitätsparameter Schwingungskoeffizient (83), dem den Erntegutdurchsatz repräsentierenden Parameter Schichthöhe (9) und dem Arbeitsparameter "Bandgeschwindigkeit rechtsseitiges und/oder linksseitiges Querförderband" (63, 64) beschreibt und die dem Kennfeld (79) zugeordnete Steuerkennlinie (90) im Bereich des Minimums des Schwingungskoeffizienten (83) liegt.

25. Landwirtschaftliche Erntemaschine (1) mit einem als Bandschneidwerk (4) ausgebildeten Erntevorsatz (3) nach einem der Ansprüche 1 und 13-24,
**dadurch gekennzeichnet, dass**
das Kennfeld (79) den Zusammenhang zwischen dem Qualitätsparameter Schwingungskoeffizient (83), dem den Erntegutdurchsatz repräsentierenden Parameter Schichthöhe (9) und dem Arbeitsparameter Haspelhorizontalposition (68) und/oder Haspelvertikalposition (67) beschreibt und die dem Kennfeld (79) zugeordnete Steuerkennlinie (90) im Bereich des Minimums des Schwingungskoeffizienten (83) liegt.

26. Landwirtschaftliche Erntemaschine (1) mit einem als Bandschneidwerk (4) ausgebildeten Erntevorsatz (3) nach einem der Ansprüche 1 und 13-25,
**dadurch gekennzeichnet, dass**
das Kennfeld (79) den Zusammenhang zwischen dem Qualitätsparameter Abscheideverlust (84) und den Arbeitsparametern Geschwindigkeit Mittenband (65) und Geschwindigkeit linksseitiges und/oder rechtsseitiges Querförderband (63, 64) beschreibt und die dem Kennfeld (79) zugeordnete Steuerkennlinie (90) im Bereich des Minimums des Abscheideverlusts (84) liegt.

27. Landwirtschaftliche Erntemaschine (1) mit einem als Bandschneidwerk (4) ausgebildeten Erntevorsatz (3) nach einem der Ansprüche 1 und 26,
**dadurch gekennzeichnet, dass**
das Kennfeld (79) den Zusammenhang zwischen dem Qualitätsparameter Abscheideverlust (84), dem den Erntegutdurchsatz repräsentierenden Parameter Hydraulikdruck (92) oder Leistungsbedarf eines Haspelantriebsmotors (34) / Haspelantriebszylinders (54, 55) und dem Arbeitsparameter Haspelhorizontalposition (68) und/oder Haspelvertikalposition (67) beschreibt und die dem Kennfeld (79) zugeordnete Steuerkennlinie (90) im Bereich des Minimums des Abscheideverlusts (84) liegt.

28. Landwirtschaftliche Erntemaschine (1) mit einem als Bandschneidwerk (4) ausgebildeten Erntevorsatz (3) nach einem der Ansprüche 1 und 27,
**dadurch gekennzeichnet, dass**
die Anpassung des jeweiligen Kennfeldes (79) in Abhängigkeit vom Schwingungskoeffizienten (83) eine schnelle Anpassung (111) des jeweiligen Kennfeldes (79) bewirkt während die Anpassung des jeweiligen Kennfeldes (79) in Abhängigkeit vom Abscheideverlust (84) eine langsamere Anpassung (112) des jeweiligen Kennfeldes (79) bewirkt.

29. Landwirtschaftliche Erntemaschine (1) mit einem als Bandschneidwerk (4) ausgebildeten Erntevorsatz (3) nach einem der vorhergehenden Ansprüche,
**dadurch gekennzeichnet, dass**
das Bandschneidwerk (4) zusammen mit dem Fahrerassistenzsystem (69) einen Bandschneidwerkautomat (78) bildet, der eingerichtet ist als Kennfeldsteuerung (80) betrieben zu werden, indem im Speicher (70) des Fahrerassistenzsystems (69) Kennfelder (79) hinterlegt sind und die Rechenvorrichtung (71) dazu eingerichtet ist mittels der hinterlegten Kennfelder (79) den Bandschneidwerkautomat (78) als Kennfeldsteuerung (80) zu betreiben und dass das Fahrerassistenzsystem (69) weiter eingerichtet ist
a. Messgrößen (97) des Bandschneidwerks (4) und/oder der landwirtschaftlichen Arbeitsmaschine(1) zu ermitteln
b. zumindest aus den ermittelten Messgrößen (97) Momentan-Arbeitspunkte (95) abzuleiten
c. den Momentan-Arbeitspunkt (95) in einen quasistationären Arbeitspunkt (103) umzurechnen
d. den quasistationären Arbeitspunkt (103) an den jeweiligen Bandschneidwerkautomat (78) oder einen oder mehrere Teilautomaten (80a..f) zu übergeben
e. in dem jeweiligen Bandschneidwerkautomat (78) oder Teilautomat (80a..f) an das dort jeweils hinterlegte Initialkennfeld (93) oder das bereits aktualisierte Kennfeld (107) zu übergeben
f. in dem jeweiligen Kennfeld (93, 107) einen Initialarbeitspunkt (97) oder einen bereits aktualisierten Arbeitspunkt durch einen quasistationären Arbeitspunkt (103) zu ersetzen
g. unter Berücksichtigung der eingefügten quasistationären Arbeitspunkte (103) ein aktualisiertes Kennfeld (107) zu berechnen
h. die Steuerkennlinie (90) des aktualisierten Kennfeldes (107) zu ermittelt
i. mittels der aktualisierten Steuerkennlinie (90) optimierte Arbeitsparameter (60') zu ermitteln
k. den jeweils optimierten Arbeitsparameter (60') dem jeweiligen Prozessaggregat (59) vorzugeben.

30. Landwirtschaftliche Erntemaschine (1) mit einem als Bandschneidwerk (4) ausgebildeten Erntevorsatz (3) nach Anspruch 29,
**dadurch gekennzeichnet, dass**
die Adaption des Kennfeldes eine Überlagerung einer dynamischen Kennfeldadaption "Schwingungskoeffizient" (111) und einer trägen Kennfeldadaption "Abscheideverlust" (112) umfasst.

31. Landwirtschaftliche Erntemaschine (1) mit einem als Bandschneidwerk (4) ausgebildeten Erntevorsatz (3) nach Anspruch 30,
**dadurch gekennzeichnet, dass**
die dynamische Kennfeldadaption (111) dadurch bewirkt wird, dass der Qualitätsparameter (82) des jeweiligen Kennfeldes (79) von dem Schwingungskoeffizienten (83) gebildet wird.

32. Landwirtschaftliche Erntemaschine (1) mit einem als Bandschneidwerk (4) ausgebildeten Erntevorsatz (3) nach Anspruch 30,
**dadurch gekennzeichnet, dass**
die träge Kennfeldadaption (112) dadurch bewirkt wird, dass der Qualitätsparameter (82) des jeweiligen Kennfeldes (79) von dem Abscheideverlust (84) gebildet wird.

33. Landwirtschaftliche Erntemaschine (1) mit einem als Bandschneidwerk (4) ausgebildeten Erntevorsatz (3) nach Anspruch 29,
**dadurch gekennzeichnet, dass**
das Fahrerassistenzsystem (69) in einen Prüfschritt (113) prüft, ob sich für die zu optimierenden Arbeitsparameter (60') bei Anwendung der dynamischen Kennfeldadaption (111) und der trägen Kennfeldadaption (112) gegenläufige Tendenzen für den Wert des jeweils optimierten Arbeitsparameters (60') einstellen.

34. Landwirtschaftliche Erntemaschine (1) mit einem als Bandschneidwerk (4) ausgebildeten Erntevorsatz (3) nach Anspruch 33,
**dadurch gekennzeichnet, dass**
eine Kostenfunktion entscheidet, welcher Arbeitspunkt (95, 103), der sich aus den Steuerkennlinien (90) ergibt angefahren wird, wobei die Kostenfunktion die Parameter Durchsatz/h, Schwingungskoeffizient (83), Abscheideverluste (84), Schneidwerksverluste beinhaltet und wobei diese Parameter unterschiedlich gewichtet sein können.

35. Landwirtschaftliche Erntemaschine (1) mit einem als Bandschneidwerk (4) ausgebildeten Erntevorsatz (3) nach Anspruch 29,
**dadurch gekennzeichnet, dass**
das Fahrerassistenzsystem (69) bei der Generierung der jeweiligen Kennfelder (79, 93, 107) Expertenwissen (114) berücksichtigt.

36. Landwirtschaftliche Erntemaschine (1) mit einem als Bandschneidwerk (4) ausgebildeten Erntevorsatz (3) nach einem der vorhergehenden Ansprüche, **dadurch gekennzeichnet, dass** der Messerbalken (41) und zumindest die ihm nachgeordneten Querförderbänder (43 ,44) flexibel ausgebildet sind.

## Claims

1. An agricultural harvesting machine (1) with a harvester front attachment (3) constructed as a draper cutting unit (4) for cutting and picking up harvested material and with a driver assistance system (69) for controlling the draper cutting unit (4), wherein the driver assistance system (69) comprises a memory (70) for storing data and a computing device (71) for processing the data stored in the memory (70) and the draper cutting unit (4) comprises at least one centre belt (45) for conveying harvested material to an intake roller (50) and/or to an intake channel of an inclined conveyor (5) and at least one transverse conveyor belt (43, 44) disposed to the left side and to the right side of the centre belt (45) for conveying the harvested material to the centre belt (45), wherein the centre belt (45), the left side and the right side transverse conveyor belt (51) are disposed behind a cutter bar (41) in the direction of travel and the upper side of the draper cutting unit (4) receives a reel (51), wherein the draper cutting unit (4) together with the driver assistance system (69) form an automated draper cutting unit (78), in which characteristic diagrams (79) are stored in the memory (70) of the driver assistance system (69) and the computing device (71) is configured to operate the automated draper cutting unit (78) as a characteristic diagram controller (80) by means of the stored characteristic diagrams (79) and the automated draper cutting unit (78) is configured to optimize operating parameters (60) of the draper cutting unit (4) and to specify the optimized operating parameters (60') to the draper cutting unit (4), wherein the one or the plurality of characteristic diagrams (79) describe the relationship between one or more operating parameters (60) and a quality parameter (82),
**characterized in that**
the quality parameter or the quality parameters (82) of the one or more characteristic diagrams (79) is an oscillation coefficient (83) or a separation loss (84).

2. The agricultural harvesting machine (1) with a harvester front attachment (3) constructed as a draper cutting unit (4) according to claim 1,
**characterized in that**
at least the right side and the left side transverse conveyor belt (43, 44), the centre belt (45), the intake roller (50), the reel (51) and/or the cutter bar (41) form processing assemblies (59) of the draper cutting unit (4) and the automated draper cutting unit (78) is configured to optimize the operating parameters (60) of one or more of these processing assemblies (59) and to specify the optimized operating parameters (60') to the respective processing assembly (59).

3. The agricultural harvesting machine (1) with a harvester front attachment (3) constructed as a draper cutting unit (4) according to claim 2,
**characterized in that**
the automated draper cutting unit (78) is configured to form processing assembly-specific automated subunits (80a...f) in a manner such that the automated draper cutting unit (78) forms one or more automated transverse conveyor belts (80a, b), an automated centre belt (80c), an automated reel (80d), an automated cutter bar (80e) and/or an automated intake roller (80f) and the respective automated subunits (80a...f) are configured to optimize the operating parameters (60) of the transverse conveyor belts (43, 44), the centre belt (45), the reel (51), the cutter bar (41) and/or the intake roller (50) of the draper cutting unit (4) and to specify the optimized operating parameters (60') to the respective processing assemblies (59) of the draper cutting unit (4).

4. The agricultural harvesting machine (1) with a harvester front attachment (3) constructed as a draper cutting unit (4) according to one of claims 2-3,
**characterized in that**
the one or the plurality of characteristic diagrams (79) associated with the automated draper cutting unit (78) describe the relationship between operating parameters (60) of a processing assembly (59) and quality parameters (82).

5. The agricultural harvesting machine (1) with a harvester front attachment (3) constructed as a draper cutting unit (4) according to claim 3,
**characterized in that**
one or more characteristic diagrams (79) are associated with each automated subunit (80a...f), wherein the one or the plurality of characteristic diagrams (79) describe at least the relationship between operating parameters (60) of the processing assembly (59) associated with the respective automated subunit (80a...f) and quality parameters (82).

6. The agricultural harvesting machine (1) with a harvester front attachment (3) constructed as a draper cutting unit (4) according to at least one of claims 4 and 5,
**characterized in that**
the respective characteristic diagram (79) takes into consideration a parameter, preferably the layer height (9), which represents the harvested material throughput.

7. The agricultural harvesting machine (1) with a harvester front attachment (3) constructed as a draper cutting unit (4) according to one of claims 2-6,
**characterized in that**
the operating parameter (60) for the "right side transverse conveyor belt" (44) processing assembly comprises at least the belt speed (64) of the right side transverse conveyor belt (44).

8. The agricultural harvesting machine (1) with a harvester front attachment (3) constructed as a draper cutting unit (4) according to one of the preceding claims,
**characterized in that**
the operating parameter (69) for the "left side transverse conveyor belt" (43) processing assembly comprises at least the belt speed (63) of the left side transverse conveyor belt (43).

9. The agricultural harvesting machine (1) with a harvester front attachment (3) constructed as a draper cutting unit (4) according to one of claims 2-8,
**characterized in that**
the operating parameter (60) for the centre belt (45) processing assembly comprises at least the belt speed (65) of the centre belt (45).

10. The agricultural harvesting machine (1) with a harvester front attachment (3) constructed as a draper cutting unit (4) according to one of claims 2-9,
**characterized in that**
the operating parameter (60) for the reel (51) processing assembly comprises at least the vertical reel position (67) and/or the horizontal reel position (68).

11. The agricultural harvesting machine (1) with a harvester front attachment (3) constructed as a draper cutting unit (4) according to one of claims 2-10,
**characterized in that**
the operating parameter (60) for the intake roller (50) processing assembly comprises at least the horizontal intake roller position (66) and/or intake roller speed (49).

12. The agricultural harvesting machine (1) with a harvester front attachment (3) constructed as a draper cutting unit (4) according to one of claims 2-11,
**characterized in that**
the operating parameter (60) for the cutter bar (41) processing assembly comprises at least the cutting speed (61) and/or the knife stroke (62).

13. The agricultural harvesting machine (1) with a harvester front attachment (3) constructed as a draper cutting unit (4) according to claim 1,
**characterized in that**
the oscillation coefficient (83) describes a fluctuation of the harvested material throughput and means (8) are provided which determine a harvested material throughput and the oscillation coefficient (83) describing the fluctuation of the harvested material throughput in a region lying in front of the threshing units (12) of the agricultural harvesting machine (1).

14. The agricultural harvesting machine (1) with a harvester front attachment (3) constructed as a draper cutting unit (4) according to claim 1,
**characterized in that**
the separation loss (84) describes the loss of grain, namely the proportion of lost grain which is discarded from the agricultural harvesting machine (1).

15. The agricultural harvesting machine (1) with a harvester front attachment (3) constructed as a draper cutting unit (4) according to one of claims 1 and 13-14,
**characterized in that**
the respective characteristic diagram (79) describes the respective operating parameter (60) as a function of oscillation coefficients (83) and of the layer height (9) representing the harvested material throughput.

16. The agricultural harvesting machine (1) with a harvester front attachment (3) constructed as a draper cutting unit (4) according to one of the preceding claims,
**characterized in that**
the respective characteristic diagram (79) describes the respective operating parameter or operating parameters (60) at least as a function of the separation loss (84).

17. The agricultural harvesting machine (1) with a harvester front attachment (3) constructed as a draper cutting unit (4) according to one of claims 15 or 16,
**characterized in that**
a control characteristic curve (90) is associated with the respective characteristic diagram (79) and the control characteristic curve (90) lies in the region of the minimum of the respective oscillation coefficient (83) or separation loss (84).

18. The agricultural harvesting machine (1) with a harvester front attachment (3) constructed as a draper cutting unit (4) according to one of the preceding claims,
**characterized in that**
the respective characteristic diagram (79) is configured as an initial characteristic diagram (93) wherein, in the initial characteristic diagram (93), at least the relationship between operating parameters (60) of a processing assembly (59) and quality parameters (82) is described by initial operating points (94), instantaneous operating points (95) are determined during the harvesting operation as a function of measured variables (97), the instantaneous operating points (95) are converted into quasi-stationary operating points (103) and the determined quasi-stationary operating points (103) overwrite the corresponding operating points (94) of the respective characteristic diagram (79), so that the initial characteristic diagram (93) is changed into an updated characteristic diagram (107).

19. The agricultural harvesting machine (1) with a harvester front attachment (3) constructed as a draper cutting unit (4) according to claim 18,
**characterized in that**
the measured variables (97) comprise the longitudinal oscillation (98) and/or the transverse oscillation (99) of a flow of harvested material (10) passing through the agricultural harvesting machine (1) and/or the planted crop height (42) and/or the hydraulic pressure (92) or power requirement of a reel drive motor (34).

20. The agricultural harvesting machine (1) with a harvester front attachment (3) constructed as a draper cutting unit (4) according to one of claims 18 or 19,
**characterized in that**
the measured variables (97) are converted into quality parameters (82) or a harvested material throughput.

21. The agricultural harvesting machine (1) with a harvester front attachment (3) constructed as a draper cutting unit (4) according to claim 18,
**characterized in that**
the instantaneous operating point (95) is converted into a quasi-stationary operating point (103) if, within a time interval (102), preferably within a time interval (102) of 6 seconds, one or more measured variables (97) remains almost constant.

22. The agricultural harvesting machine (1) with a harvester front attachment (3) constructed as a draper cutting unit (4) according to claim 21,
**characterized in that**
the time interval (102) is measured such that a dead time interval (109) in the chain of measurements (110) is compensated for.

23. The agricultural harvesting machine (1) with a harvester front attachment (3) constructed as a draper cutting unit (4) according to one of claims 1 and 13-22,
**characterized in that**
the characteristic diagram (79) describes the relationship between the oscillation coefficient (83) quality parameter, the layer height (9) parameter representing the harvested material throughput and the "belt speed of centre belt" (65) operating parameter and the control characteristic curve (90) associated with the characteristic diagram (79) lies in the region of the minimum of the oscillation coefficient (83).

24. The agricultural harvesting machine (1) with a harvester front attachment (3) constructed as a draper cutting unit (4) according to one of claims 1 and 13-23,
**characterized in that**
the characteristic diagram (79) describes the relationship between the oscillation coefficient (83) quality parameter, the layer height (9) parameter representing the harvested material throughput and the "belt speed of right side and/or left side transverse conveyor belt" (63, 64) and the control characteristic curve (90) associated with the characteristic diagram (79) lies in the region of the minimum of the oscillation coefficient (83).

25. The agricultural harvesting machine (1) with a harvester front attachment (3) constructed as a draper cutting unit (4) according to one of claims 1 and 13-24,
**characterized in that**
the characteristic diagram (79) describes the relationship between the oscillation coefficient (83) quality parameter, the layer height (9) parameter representing the harvested material throughput and the horizontal reel position (68) and/or vertical reel position (67) operating parameter and the control characteristic curve (90) associated with the characteristic diagram (79) lies in the region of the minimum of the oscillation coefficient (83).

26. The agricultural harvesting machine (1) with a harvester front attachment (3) constructed as a draper cutting unit (4) according to one of claims 1 and 13-25,
**characterized in that**
the characteristic diagram (79) describes the relationship between the separation loss (84) quality parameter and the centre belt (65) speed and left side and/or right side transverse conveyor belt (63, 64) speed operating parameters and the control characteristic curve (90) associated with the characteristic diagram (79) lies in the region of the minimum of the separation loss (84).

27. The agricultural harvesting machine (1) with a harvester front attachment (3) constructed as a draper cutting unit (4) according to one of claims 1 and 26,
**characterized in that**
the characteristic diagram (79) describes the relationship between the separation loss (84) quality parameter, the hydraulic pressure (92) or power requirement of a reel drive motor (34)/reel drive cylinder (54, 55) parameters representing the harvested material throughput and the horizontal reel position (68) and/or vertical reel position (67) operating parameter and the control characteristic curve (90) associated with the characteristic diagram (79) lies in the region of the minimum of the separation loss (84).

28. The agricultural harvesting machine (1) with a harvester front attachment (3) constructed as a draper cutting unit (4) according to one of claims 1 and 27,
**characterized in that**
the adaptation of the respective characteristic diagram (79) as a function of the oscillation coefficient (83) brings about a rapid adaptation (111) of the respective characteristic diagram (79), while the adaptation of the respective characteristic diagram (79) as a function of the separation loss (84) brings about a slower adaptation (112) of the respective characteristic diagram (79).

29. The agricultural harvesting machine (1) with a harvester front attachment (3) constructed as a draper cutting unit (4) according to one of the preceding claims,
**characterized in that**
the draper cutting unit (4) together with the driver assistance system (69) forms an automated draper cutting unit (78) which is configured to be operated as a characteristic diagram controller (80) in which characteristic diagrams (79) are stored in the memory (70) of the driver assistance system (69) and the computing device (71) is configured to operate the automated draper cutting unit (78) as a characteristic diagram controller (80) by means of the stored characteristic diagrams (79) and **in that** the driver assistance system (69) is further configured
a. to determine measured variables (97) of the draper cutting unit (4) and/or of the agricultural working machine (1)
b. to derive instantaneous operating points (95) from at least the determined measured variables (97)
c. to convert the instantaneous operating point (95) into a quasi-stationary operating point (103)
d. to transfer the quasi-stationary operating point (103) to the respective automated draper cutting unit (78) or to one or more automated subunits (80a...f)
e. in the respective automated draper cutting unit (78) or automated subunit (80a...f), to transfer to the respective stored initial characteristic diagram (93) or to the already-updated characteristic diagram (107)
f. in the respective characteristic diagram (93, 107), to replace an initial operating point (97) or an already-updated operating point by a quasi-stationary operating point (103)
g. to calculate an updated characteristic diagram (107), taking the inserted quasi-stationary operating points (103) into consideration
h. to determine the control characteristic curve (90) of the updated characteristic diagram (107)
i. to determine optimized operating parameters (60') by means of the updated control characteristic curve (90)
k. to specify the respective optimized operating parameters (60') to the respective processing assembly (59).

30. The agricultural harvesting machine (1) with a harvester front attachment (3) constructed as a draper cutting unit (4) according to claim 29,
**characterized in that**
the adaptation of the characteristic diagram comprises a superimposition of a dynamic "oscillation coefficient" (111) characteristic diagram adaptation and a delayed "separation loss" (112) characteristic diagram adaptation.

31. The agricultural harvesting machine (1) with a harvester front attachment (3) constructed as a draper cutting unit (4) according to claim 30,
**characterized in that**
the dynamic characteristic diagram adaptation (111) thereby causes the quality parameter (82) of the respective characteristic diagram (79) to be formed by the oscillation coefficient (83).

32. The agricultural harvesting machine (1) with a harvester front attachment (3) constructed as a draper cutting unit (4) according to claim 30,
**characterized in that**
the delayed characteristic diagram adaptation (112) thereby causes the quality parameter (82) of the respective characteristic diagram (79) to be formed by the separation loss (84).

33. The agricultural harvesting machine (1) with a harvester front attachment (3) constructed as a draper cutting unit (4) according to claim 29,
**characterized in that**
in a test step (113), the driver assistance system (69) tests whether opposing tendencies for the value of the respective optimized operating parameter (60') are set for the operating parameters (60') to be optimized when applying the dynamic characteristic diagram adaptation (111) and the delayed characteristic diagram adaptation (112).

34. The agricultural harvesting machine (1) with a harvester front attachment (3) constructed as a draper cutting unit (4) according to claim 33,
**characterized in that**
a cost function decides which operating point (95, 103) resulting from the control characteristic curves (90) is approached, wherein the cost function contains the parameters of throughput/h, oscillation coefficient (83), separation losses (84), cutting unit losses, and wherein these parameters may be weighted differently.

35. The agricultural harvesting machine (1) with a harvester front attachment (3) constructed as a draper cutting unit (4) according to claim 29,
**characterized in that**
the driver assistance system (69) takes expert knowledge (114) into consideration during the generation of the respective characteristic diagrams (79, 93, 107).

36. The agricultural harvesting machine (1) with a harvester front attachment (3) constructed as a draper cutting unit (4) according to one of the preceding claims,
**characterized in that**
the cutter bar (41) and at least the transverse conveyor belts (43, 44) disposed downstream thereof are flexible in construction.

## Revendications

1. Machine de récolte agricole (1) dotée d'un organe de récolte frontal (3) réalisé sous forme de tablier de coupe à tapis (4) et destiné à la coupe et au ramassage de produits à récolter, et dotée d'un système d'aide à la conduite (69) destiné à la commande du tablier de coupe à tapis (4), le système d'aide à la conduite (69) comprenant une mémoire (70) pour le stockage de données et un dispositif de calcul (71) pour le traitement des données stockées dans la mémoire (70), et le tablier de coupe à tapis (4) comprenant au moins un convoyeur central (45), destiné au convoyage de produits récoltés vers un rouleau d'alimentation (50) et/ou vers un canal d'alimentation d'un convoyeur incliné (5), et au moins un convoyeur transversal (43, 44) disposé côté gauche et côté droit par rapport au convoyeur central (45) et destiné au transport de la récolte vers le convoyeur central (45), sachant que le convoyeur central (45), le convoyeur transversal (51) côté gauche et côté droit sont disposés derrière une barre porte-lames (41), dans le sens de la marche, et le tablier de coupe à tapis (4) accueille un rabatteur (51) côté supérieur, sachant que le tablier de coupe à tapis (4) forme avec le système d'aide à la conduite (69) un automate de tablier de coupe à tapis (78), par le fait que des diagrammes caractéristiques (79) sont enregistrés dans la mémoire (70) du système d'aide à la conduite (69) et le dispositif de calcul (71) est conçu pour faire fonctionner l'automate de tablier de coupe à tapis (78) en tant que commande à diagrammes caractéristiques (80), à l'aide des diagrammes caractéristiques (79) enregistrés, et l'automate de tablier de coupe à tapis (78) est conçu pour optimiser des paramètres de travail (60) du tablier de coupe à tapis (4) et pour prédéfinir les paramètres de travail optimisés (60') pour le tablier de coupe à tapis (4), le ou les diagrammes caractéristiques (79) décrivant la relation entre un ou plusieurs paramètres de travail (60) et un paramètre de qualité (82), **caractérisée en ce que** le ou les paramètres de qualité (82) du ou des diagrammes caractéristiques (79) est un coefficient d'oscillation (83) ou une perte à la séparation (84).

2. Machine de récolte agricole (1) dotée d'un organe de récolte frontal (3) réalisé sous forme de tablier de coupe à tapis (4) selon la revendication 1,
**caractérisée en ce que**
au moins le convoyeur transversal (43, 44) côté droit et côté gauche, le convoyeur central (45), le rouleau d'alimentation (50), le rabatteur (51) et/ou la barre porte-lames (41) constituent des organes de traitement (59) du tablier de coupe à tapis (4), et l'automate de tablier de coupe à tapis (78) est conçu pour optimiser les paramètres de travail (60) d'un ou plusieurs de ces organes de traitement (59) et pour prédéfinir les paramètres de travail optimisés (60') pour l'organe de traitement (59) concerné.

3. Machine de récolte agricole (1) dotée d'un organe de récolte frontal (3) réalisé sous forme de tablier de coupe à tapis (4) selon la revendication 2,
**caractérisée en ce que**
l'automate de tablier de coupe à tapis (78) est conçu pour former des sous-automates (80a..f) spécifiques aux organes de traitement, de manière à ce que l'automate de tablier de coupe à tapis (78) forme un ou plusieurs automates de convoyeur transversal (80a, b), un automate de convoyeur central (80c), un automate de rabatteur (80d), un automate de barre porte-lames (80e) et/ou un automate de rouleau d'alimentation (80f), et que les sous-automates (80a..f) respectifs sont conçus pour optimiser les paramètres de travail (60) des convoyeurs transversaux (43, 44), du convoyeur central (45), du rabatteur (51), de la barre porte-lames (41) et/ou du rouleau d'alimentation (50) du tablier de coupe à tapis (4), et pour prédéfinir les paramètres de travail optimisés (60') pour l'organe de traitement (59) concerné du tablier de coupe à tapis (4).

4. Machine de récolte agricole (1) dotée d'un organe de récolte frontal (3) réalisé sous forme de tablier de coupe à tapis (4) selon une des revendications 2 à 3,
**caractérisée en ce que**
un diagramme caractéristique ou la pluralité de diagrammes caractéristiques (79) associés à l'automate de tablier de coupe à tapis (78) décrivent la relation entre des paramètres de travail (60) d'un organe de traitement et des paramètres de qualité (82).

5. Machine de récolte agricole (1) dotée d'un organe de récolte frontal (3) réalisé sous forme de tablier de coupe à tapis (4) selon la revendication 3,
**caractérisée en ce que**
un ou plusieurs diagrammes caractéristiques (79) sont associés à chaque sous-automate (80a..f), sachant que le ou les diagrammes caractéristiques (79) décrivent au moins la relation entre des paramètres de travail (60) de l'organe de traitement (59) associé au sous-automate (80a..f) respectif et des paramètres de qualité (82).

6. Machine de récolte agricole (1) dotée d'un organe de récolte frontal (3) réalisé sous forme de tablier de coupe à tapis (4) selon au moins une des revendications 4 et 5,
**caractérisée en ce que**
le diagramme caractéristique (79) respectif prend en compte un paramètre représentant le débit de récolte, de préférence la hauteur de couche (9).

7. Machine de récolte agricole (1) dotée d'un organe de récolte frontal (3) réalisé sous forme de tablier de coupe à tapis (4) selon une des revendications 2 à 6,
**caractérisée en ce que**
le paramètre de travail (60) de l'organe de traitement « convoyeur transversal côté droit » (44) inclut au moins la vitesse de convoyeur (64) du convoyeur transversal côté droit (44).

8. Machine de récolte agricole (1) dotée d'un organe de récolte frontal (3) réalisé sous forme de tablier de coupe à tapis (4) selon une des revendications précédentes,
**caractérisée en ce que**
le paramètre de travail (69) de l'organe de traitement « convoyeur transversal côté gauche » (43) inclut au moins la vitesse de convoyeur (63) du convoyeur transversal côté gauche (43).

9. Machine de récolte agricole (1) dotée d'un organe de récolte frontal (3) réalisé sous forme de tablier de coupe à tapis (4) selon une des revendications 2 à 8,
**caractérisée en ce que**
le paramètre de travail (60) de l'organe de traitement convoyeur central (45) inclut au moins la vitesse de convoyeur (65) du convoyeur central (45).

10. Machine de récolte agricole (1) dotée d'un organe de récolte frontal (3) réalisé sous forme de tablier de coupe à tapis (4) selon une des revendications 2 à 9,
**caractérisée en ce que**
le paramètre de travail (60) de l'organe de traitement rabatteur (51) inclut au moins la position verticale de rabatteur (67) et/ou la position horizontale de rabatteur (68).

11. Machine de récolte agricole (1) dotée d'un organe de récolte frontal (3) réalisé sous forme de tablier de coupe à tapis (4) selon une des revendications 2 à 10,
**caractérisée en ce que**
le paramètre de travail (60) de l'organe de traitement rouleau d'alimentation (50) inclut au moins la position horizontale de rouleau d'alimentation (66) et/ou la vitesse de rotation de rouleau d'alimentation (49).

12. Machine de récolte agricole (1) dotée d'un organe de récolte frontal (3) réalisé sous forme de tablier de coupe à tapis (4) selon une des revendications 2 à 11,
**caractérisée en ce que**
le paramètre de travail (60) de l'organe de traitement barre porte-lames (41) inclut au moins la vitesse de coupe (61) et/ou la course des lames (62).

13. Machine de récolte agricole (1) dotée d'un organe de récolte frontal (3) réalisé sous forme de tablier de coupe à tapis (4) selon la revendication 1,
**caractérisée en ce que**
le coefficient d'oscillation (83) décrit une variation du débit de récolte, et qu'il est prévu des moyens (8) qui déterminent un débit de récolte et le coefficient d'oscillation (83) décrivant la variation du débit de récolte, dans une zone située devant les organes de battage (12) de la machine de récolte agricole (1).

14. Machine de récolte agricole (1) dotée d'un organe de récolte frontal (3) réalisé sous forme de tablier de coupe à tapis (4) selon la revendication 1,
**caractérisée en ce que**
la perte à la séparation (84) décrit la perte de grains, à savoir la part de grains perdus évacuée de la machine de récolte agricole (1).

15. Machine de récolte agricole (1) dotée d'un organe de récolte frontal (3) réalisé sous forme de tablier de coupe à tapis (4) selon une des revendications 1 et 13 à 14,
**caractérisée en ce que**
le diagramme caractéristique (79) respectif décrit le paramètre de travail (60) respectif en fonction du coefficient d'oscillation (83) et de la hauteur de couche (9) représentant le débit de récolte (84).

16. Machine de récolte agricole (1) dotée d'un organe de récolte frontal (3) réalisé sous forme de tablier de coupe à tapis (4) selon une des revendications précédentes,
**caractérisée en ce que**
le diagramme caractéristique (79) respectif décrit le ou les paramètres de travail (60) respectifs au moins en fonction de la perte à la séparation (84).

17. Machine de récolte agricole (1) dotée d'un organe de récolte frontal (3) réalisé sous forme de tablier de coupe à tapis (4) selon une des revendications 15 ou 16,
**caractérisée en ce que**
une courbe caractéristique de commande (90) est associée au diagramme caractéristique (79) respectif, et la courbe caractéristique de commande (90) se situe dans la plage du minimum du coefficient d'oscillation (83) respectif ou de la perte à la séparation (84) respective.

18. Machine de récolte agricole (1) dotée d'un organe de récolte frontal (3) réalisé sous forme de tablier de coupe à tapis (4) selon une des revendications précédentes,
**caractérisée en ce que**
le diagramme caractéristique (79) respectif est conçu comme diagramme caractéristique initial (93), sachant qu'au moins la relation entre des paramètres de travail (60) d'un organe de traitement (59) et des paramètres de qualité (82) est décrite dans le diagramme caractéristique initial (93) par des points de fonctionnement initiaux (94), que lors du processus de récolte, des points de fonctionnement instantanés (95) sont déterminés en fonction de grandeurs de mesure (97), que les points de fonctionnement instantanés (95) sont convertis en points de fonctionnement quasi-stationnaires (103), et que les points de fonctionnement quasi-stationnaires (103) déterminés sont inscrits à la place des points de fonctionnement (94) correspondants du diagramme caractéristique (79) respectif, de sorte que le diagramme caractéristique initial (93) est transformé en diagramme caractéristique actualisé (107).

19. Machine de récolte agricole (1) dotée d'un organe de récolte frontal (3) réalisé sous forme de tablier de coupe à tapis (4) selon la revendication 18,
**caractérisée en ce que**
les grandeurs de mesure (86) incluent l'oscillation longitudinale (98) et/ou l'oscillation transversale (99) d'un flux de récolte (10) traversant la machine de récolte agricole (1), et/ou la hauteur des cultures (42) et/ou la pression hydraulique (92) ou le besoin de puissance d'un moteur d'entraînement de rabatteur (34).

20. Machine de récolte agricole (1) dotée d'un organe de récolte frontal (3) réalisé sous forme de tablier de coupe à tapis (4) selon une des revendications 18 ou 19,
**caractérisée en ce que**
les grandeurs de mesure (97 sont converties en paramètres de qualité (82) ou en un débit de récolte.

21. Machine de récolte agricole (1) dotée d'un organe de récolte frontal (3) réalisé sous forme de tablier de coupe à tapis (4) selon la revendication 18,
**caractérisée en ce que**
le point de fonctionnement instantané (95) passe en point de fonctionnement quasi-stationnaire (103) si une ou plusieurs grandeurs de mesure (97) restent à peu près constantes à l'intérieur d'un intervalle de temps (102), de préférence à l'intérieur d'un intervalle de temps (102) de 6 secondes.

22. Machine de récolte agricole (1) dotée d'un organe de récolte frontal (3) réalisé sous forme de tablier de coupe à tapis (4) selon la revendication 21,
**caractérisée en ce que**
l'intervalle de temps (102) est prévu de manière à ce qu'un intervalle de temps mort (109) dans la chaîne de mesure (110) soit compensé.

23. Machine de récolte agricole (1) dotée d'un organe de récolte frontal (3) réalisé sous forme de tablier de coupe à tapis (4) selon une des revendications 1 et 13 à 22,
**caractérisée en ce que**
le diagramme caractéristique (79) décrit la relation entre le paramètre de qualité coefficient d'oscillation (83), le paramètre hauteur de couche (9) représentant le débit de récolte et le paramètre de travail « vitesse de bande du convoyeur central » (65), et la courbe caractéristique de commande (90) associée au diagramme caractéristique (79) se situe dans la plage du minimum du coefficient d'oscillation (83).

24. Machine de récolte agricole (1) dotée d'un organe de récolte frontal (3) réalisé sous forme de tablier de coupe à tapis (4) selon une des revendications 1 et 13 à 23,
**caractérisée en ce que**
le diagramme caractéristique (79) décrit la relation entre le paramètre de qualité coefficient d'oscillation (83), le paramètre hauteur de couche (9) représentant le débit de récolte et le paramètre de travail « vitesse de bande du convoyeur transversal côté droit et/ou côté gauche » (63, 64), et la courbe caractéristique de commande (90) associée au diagramme caractéristique (79) se situe dans la plage du minimum du coefficient d'oscillation (83).

25. Machine de récolte agricole (1) dotée d'un organe de récolte frontal (3) réalisé sous forme de tablier de coupe à tapis (4) selon une des revendications 1 et 13 à 24,
**caractérisée en ce que**
le diagramme caractéristique (79) décrit la relation entre le paramètre de qualité coefficient d'oscillation (83), le paramètre hauteur de couche (9) représentant le débit de récolte et le paramètre de travail position horizontale de rabatteur (68) et/ou position verticale de rabatteur (67), et la courbe caractéristique de commande (90) associée au diagramme caractéristique (79) se situe dans la plage du minimum du coefficient d'oscillation (83).

26. Machine de récolte agricole (1) dotée d'un organe de récolte frontal (3) réalisé sous forme de tablier de coupe à tapis (4) selon une des revendications 1 et 13 à 25,
**caractérisée en ce que**
le diagramme caractéristique (79) décrit la relation entre le paramètre de qualité perte à la séparation (84) et les paramètres de travail vitesse du convoyeur central (65) et vitesse du convoyeur transversal côté gauche et/ou côté droit (63, 64), et la courbe caractéristique de commande (90) associée au diagramme caractéristique (79) se situe dans la plage du minimum de la perte à la séparation (84).

27. Machine de récolte agricole (1) dotée d'un organe de récolte frontal (3) réalisé sous forme de tablier de coupe à tapis (4) selon une des revendications 1 et 26,
**caractérisée en ce que**
le diagramme caractéristique (79) décrit la relation entre le paramètre de qualité perte à la séparation (84), le paramètre pression hydraulique (92), représentant le débit de récolte, ou le besoin de puissance d'un moteur d'entraînement de rabatteur (34) / vérin d'entraînement de rabatteur (54, 55) et le paramètre de travail position horizontale du rabatteur (68) et/ou position verticale du rabatteur (67), et la courbe caractéristique de commande (90) associée au diagramme caractéristique (79) se situe dans la plage du minimum de la perte à la séparation (84).

28. Machine de récolte agricole (1) dotée d'un organe de récolte frontal (3) réalisé sous forme de tablier de coupe à tapis (4) selon une des revendications 1 et 27,
**caractérisée en ce que**
l'adaptation du diagramme caractéristique (79) respectif en fonction du coefficient d'oscillation (83) a pour effet une adaptation (111) rapide du diagramme caractéristique (79) respectif, tandis que l'adaptation du diagramme caractéristique (79) respectif en fonction de la perte à la séparation (84) a pour effet une adaptation (112) plus lente du diagramme caractéristique (79) respectif.

29. Machine de récolte agricole (1) dotée d'un organe de récolte frontal (3) réalisé sous forme de tablier de coupe à tapis (4) selon une des revendications précédentes,
**caractérisée en ce que**
le tablier de coupe à tapis (4) forme avec le système d'aide à la conduite (69) un automate de tablier de coupe à tapis (78) qui est conçu pour fonctionner comme commande à diagrammes caractéristiques (80), par le fait que des diagrammes caractéristiques (79) sont enregistrés dans la mémoire (70) du système d'aide à la conduite (69), et le dispositif de calcul (71) est conçu pour faire fonctionner l'automate de tablier de coupe à tapis (78) comme commande à diagrammes caractéristiques (80), à l'aide des diagrammes caractéristiques (79) enregistrés, et **en ce que** le système d'aide à la conduite (69) est en outre conçu pour
a. déterminer des grandeurs de mesure (97) du tablier de coupe à tapis (4) et/ou de la machine de travail agricole (1) ;
b. déduire des points de fonctionnement instantanés (95) à partir des grandeurs de mesure (97) déterminées ;
c. convertir le point de fonctionnement instantané (95) en un point de fonctionnement quasi-stationnaire (103) ;
d. transférer le point de fonctionnement quasi-stationnaire (103) à l'automate de tablier de coupe à tapis (78) respectif ou à un ou plusieurs sous-automates (80a..f) ;
e. transférer, dans l'automate de tablier de coupe à tapis (78) ou le sous-automate (80a..f) respectif, au diagramme caractéristique initial (93) respectivement enregistré ou au diagramme caractéristique déjà actualisé (107) ;
f. remplacer, dans le diagramme caractéristique (93, 107) respectif, un point de fonctionnement initial (97) ou un point de fonctionnement déjà actualisé par un point de fonctionnement quasi-stationnaire (103) ;
g. calculer un diagramme caractéristique actualisé (107), en tenant compte des points de fonctionnement quasi-stationnaires (103) insérés ;
h. déterminer la courbe caractéristique de commande (90) du diagramme caractéristique actualisé (107) ;
i. déterminer des paramètres de travail optimisés (60') à l'aide de la courbe caractéristique de commande (90) actualisée ;
k. prédéfinir le paramètre de travail optimisé (60') respectif pour l'organe de traitement (59) concerné.

30. Machine de récolte agricole (1) dotée d'un organe de récolte frontal (3) réalisé sous forme de tablier de coupe à tapis (4) selon la revendication 29,
**caractérisée en ce que**
l'adaptation du diagramme caractéristique inclut une superposition d'une adaptation dynamique de diagramme caractéristique « coefficient d'oscillation » (111) et d'une adaptation inerte de diagramme caractéristique « perte à la séparation » (112).

31. Machine de récolte agricole (1) dotée d'un organe de récolte frontal (3) réalisé sous forme de tablier de coupe à tapis (4) selon la revendication 30,
**caractérisée en ce que**
l'adaptation dynamique de diagramme caractéristique (111) est obtenue par le fait que le paramètre de qualité (82) du diagramme caractéristique (79) respectif est constitué du coefficient d'oscillation (83).

32. Machine de récolte agricole (1) dotée d'un organe de récolte frontal (3) réalisé sous forme de tablier de coupe à tapis (4) selon la revendication 30,
**caractérisée en ce que**
l'adaptation inerte de diagramme caractéristique (112) est obtenue par le fait que le paramètre de qualité (82) du diagramme caractéristique (79) respectif est constitué de la perte à la séparation (84).

33. Machine de récolte agricole (1) dotée d'un organe de récolte frontal (3) réalisé sous forme de tablier de coupe à tapis (4) selon la revendication 29,
**caractérisée en ce que**
le système d'aide à la conduite (69) vérifie lors d'une étape de vérification (113) si, pour les paramètres de travail à optimiser (60'), des tendances opposées se produisent pour la valeur du paramètre de travail optimisé (60') respectif, lors de l'application de l'adaptation dynamique de diagramme caractéristique (111) et de l'adaptation inerte de diagramme caractéristique (112).

34. Machine de récolte agricole (1) dotée d'un organe de récolte frontal (3) réalisé sous forme de tablier de coupe à tapis (4) selon la revendication 33,
**caractérisée en ce que**
une fonction de coût décide quel point de fonctionnement (95, 103), résultant des courbes caractéristiques de commande (90), est visé, la fonction de coût incluant les paramètres de débit/h, coefficient d'oscillation (83), perte à la séparation (84), pertes de tablier de coupe, et ces paramètres pouvant faire l'objet de pondérations différentes.

35. Machine de récolte agricole (1) dotée d'un organe de récolte frontal (3) réalisé sous forme de tablier de coupe à tapis (4) selon la revendication 29,
**caractérisée en ce que**
le système d'aide à la conduite (69) prend en compte des connaissances d'expert (114) lors de la génération des diagrammes caractéristiques (79, 93, 107) respectifs.

36. Machine de récolte agricole (1) dotée d'un organe de récolte frontal (3) réalisé sous forme de tablier de coupe à tapis (4) selon une des revendications précédentes, **caractérisée en ce que** la barre porte-lames (41) et au moins les convoyeurs transversaux (43, 44) placés à sa suite sont réalisés sous une forme flexible.
